# EUROPEAN PATENT APPLICATION

(11) **EP 4 692 747 A1**
(43) Date of publication of application: **11.02.2026**
(21) Application number: 24784681.9
(22) Date of filing: 11.03.2024
(51) Int. Cl.: G01L 5/169, G01L 5/00

(54) **DETECTION DEVICE**

(30) Priority: 05.04.2023 JP 2023061738
(71) Applicant: DENSO CORPORATION, Kariya-city, Aichi 448-8661 (JP)
(72) Inventor: KIDA, Yoshihiro, Nisshin-city, Aichi 4700111 (JP); AKAMA, Sadahiro, Kariya- city, Aichi 4488661 (JP); HORIHATA, Harumi, Kariya- city, Aichi 4488661 (JP); HANDA, Akihiro, Kariya- city, Aichi 4488661 (JP)
(74) Representative: Kuhnen & Wacker Patent- und Rechtsanwaltsbüro PartG mbB
(86) International application number: PCT/JP2024/009289
(87) International publication number: WO 2024/209886

(57) **Abstract**

A detector is adapted to a machine including a rotating body (10). The detector includes a bearing (50), a detection target (82, 83, 182, 183, 282, 283), a receiving coil (110, 120, 130, 150, 160, 111, 112, 121, 122, 110A, 120A, 130A, 110B, 120B, 130B) and an excitation coil (100, 100A, 100B). The bearing rotatably supports the rotating body relative to a base portion (42) of the machine. The receiving coil includes an outer coil (110, 111, 112, 110A, 110B) and an inner coil (120, 121, 122, 120A, 120B). The excitation coil (100, 100A, 100B) receives an AC excitation voltage. The outer coil and the inner coil output an AC voltage signal having an amplitude varying with a displacement of the detection target in a direction perpendicular to an axial direction, in response to the excitation coil receiving the AC excitation voltage.

## Description

### CROSS REFERENCE TO RELATED APPLICATION

This application is based on Japanese Patent Application No. 2023-061738 filed on April 5, 2023, the disclosure of which is incorporated herein by reference.

### TECHNICAL FIELD

The present disclosure relates to a detector.

### BACKGROUND ART

Conventionally, a bearing device that rotatably support a hub fixed to a wheel with respect to a vehicle body are known. The bearing device includes: an outer ring that is fixed to the vehicle body; an inner ring that is fixed to the hub; and a rolling element that is positioned between the outer ring and the inner ring. Here, in order to stabilize the running of the vehicle, it is desirable to perform vehicle running control based on the forces acting on the wheel.

As a configuration for detecting the force acting on the wheel, Patent Literature 1 discloses an axial strain sensor, a radial strain sensor, and a control unit. The axial strain sensor detects axial displacement of the outer ring, and the radial strain sensor detects radial displacement of the outer ring. Since there is a correlation between the displacement and the force acting on the wheel, the displacement can be converted to force. Therefore, the control unit calculates the axial force of the wheel based on the displacement detected by the axial strain sensor, and calculates the vertical force acting on the wheel based on the displacement detected by the radial strain sensor.

### PRIOR ART LITERATURE

### PATENT LITERATURE

Patent Literature 1: JP 5436191 B2

### SUMMARY OF INVENTION

There is a demand for a new sensor capable of detecting displacement perpendicular to the axial direction of a bearing, not only in a vehicle equipped with wheels but also in a machine equipped with a rotatable body.

The main objective of the present disclosure is to provide a detector capable of detecting displacement in a direction perpendicular to the axial direction of a bearing.

In the present disclosure, a detector is adapted to a machine including a rotating body. The detector includes a bearing, a detection target, a receiving coil and an excitation coil. The bearing rotatably supports the rotating body relative to a base portion of the machine. The detection target extends in a circumferential direction of the bearing and has an annular shape concentric with the bearing. The receiving coil has a planar shape and extends in a radial direction of the bearing. The receiving coil is fixed to the base portion and disposed at a position facing the detection target in an axial direction of the bearing. The excitation coil receives an AC excitation voltage. The detection target rotates with the rotating body. The receiving coil includes: an outer coil that induces a voltage upon application of the excitation voltage to the excitation coil; and an inner coil that induces a voltage having a same phase as a phase of the voltage induced in the outer coil in response to the excitation coil receiving the AC excitation voltage. The outer coil is positioned radially outward relative to the inner coil. In a plan view of the outer coil and the inner coil, one radial end of the outer coil and one radial end of the inner coil extend beyond corresponding radial ends of the detection target. The outer coil and the inner coil output an AC voltage signal having an amplitude varying with a displacement of the detection target portion in a direction perpendicular to the axial direction, in response to the excitation coil receiving the AC excitation voltage.

In the present disclosure, the detection target extends in the circumferential direction and forms an annular shape concentric with the bearing. The outer coil and the inner coil, which are provided at positions facing the detection target in the axial direction, output an AC voltage signal when excitation voltage is applied to the excitation coil.

In a plan view of the outer coil and the inner coil, one end in the radial direction of the outer coil and one end in the radial direction of the inner coil extend beyond the radial end of the detection target. As a result, the AC voltage signals output from the outer coil and the inner coil become signals whose amplitude corresponds to the displacement of the detection target in the direction perpendicular to the axial direction. Therefore, based on the output voltage signals of the outer coil and the inner coil, it is possible to detect displacement in the direction perpendicular to the axial direction.

### BRIEF DESCRIPTION OF DRAWINGS

The above and other objects, features and advantages of the present disclosure will become more apparent from the following detailed description made with reference to the accompanying drawings. In the drawings:
FIG. 1 is a longitudinal sectional view of a wheel according to the first embodiment;
FIG. 2 is a plan view of the target rotor;
FIG. 3 is a perspective view of the target rotor;
FIG. 4 is an enlarged view of the vicinity of a detection unit of the target rotor;
FIG. 5 is a plan view of the detection unit;
FIG. 6 is a diagram showing the electrical configuration of the detection unit;
FIG. 7 is a diagram showing a state in which an inner ring tilts to an outer ring when a lateral force acts on the tire;
FIG. 8 is a diagram showing the vertical displacement of the inner ring when a vertical load acts on the tire;
FIG. 9 is a plan view of the outer coil;
FIG. 10 is a plan view of the inner coil;
FIG. 11 is a plan view of the intermediate coil;
FIG. 12 is a diagram showing the positional relationship among each coil and the target rotor in a reference state;
FIG. 13 is a diagram for explaining the principle of detecting displacement and rotation angle;
FIG. 14 is a diagram for explaining the principle of detecting displacement and rotation angle;
FIG. 15 is a plan view of a simplified receiving coil;
FIG. 16 is a diagram showing the transitions of the output voltage signal of a receiving coil and the envelope of this signal;
FIG. 17 is a diagram showing the change from the reference state of the output voltage signal of the coil when a lateral force is applied;
FIG. 18 is a diagram showing the change from the reference state of the output voltage signal of the coil when a vertical load is applied;
FIG. 19 is a diagram showing the relationship between the radial displacement of the target rotor and the output voltage signal of the coil;
FIG. 20 is a flowchart showing the procedure for angle and force calculation processing in the receiving circuit;
FIG. 21 is a diagram showing the positional relationship between each coil and the protrusions of the target rotor according to a second embodiment;
FIG. 22 is a diagram showing the positional relationship between each coil and the protrusions of the target rotor according to a third embodiment;
FIG. 23 is a plan view of the target rotor;
FIG. 24 is a diagram showing the electrical configuration of the detection unit;
FIG. 25 is a flowchart showing the procedure for angle and force calculation processing in the receiving circuit;
FIG. 26 is a diagram showing the positional relationship between each coil and the protrusions of the target rotor according to a fourth embodiment;
FIG. 27 is a flowchart showing the procedure for angle and force calculation processing in the receiving circuit;
FIG. 28 is a longitudinal sectional view of a wheel according to a fifth embodiment;
FIG. 29 is a flowchart showing the procedure for force correction processing in the receiving circuit;
FIG. 30 is a diagram showing each detection unit and the target rotor according to a sixth embodiment;
FIG. 31 is a sectional view taken along line 31-31 of FIG. 30;
FIG. 32 is a sectional view taken along line 32-32 of FIG. 30;
FIG. 33 is a diagram showing the electrical configuration of each detection unit;
FIG. 34 is a flowchart showing the procedure for angle and force calculation processing in the receiving circuit; and
FIG. 35 is a plan view of a target rotor according to another embodiment.

### DETAILED DESCRIPTION OF EMBODIMENTS

Several embodiments will be described with reference to the drawings. In the several embodiments, functionally and/or structurally corresponding parts and/or associated parts may be denoted by the same reference numerals, or by reference numerals differing in their hundreds digit. For corresponding parts and/or associated parts, reference may be made to the description of other embodiments.

### (First Embodiment)

Hereinafter, a first embodiment embodying a detector according to the present disclosure will be described with reference to the drawings. A vehicular device of the present embodiment is capable of calculating a force acting on a wheel (drive wheel) equipped with an in-wheel motor. A vehicle is, for example, a four-wheeled boarding vehicle having two front wheels and two rear wheels. However, the vehicle is not limited to this, and may be a vehicle other than a four-wheeled vehicle, such as a two-wheeled vehicle. In addition, the application of the vehicle is not limited to boarding use.

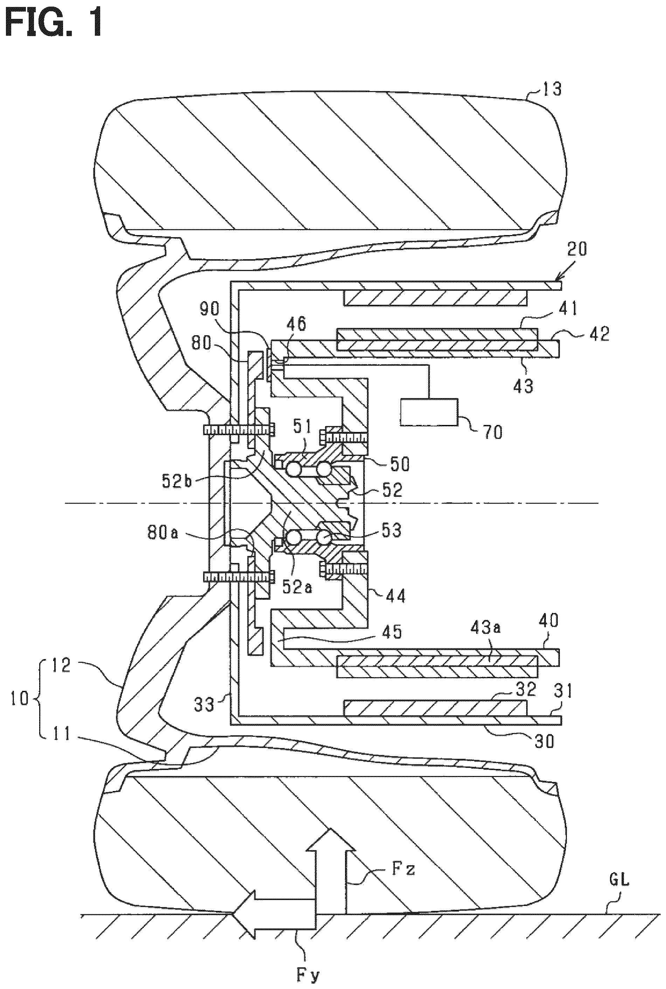

As shown in FIG. 1, the wheels of the vehicle are rotating bodies including a wheel 10 and an in-wheel motor 20. The wheel 10 includes a rim portion 11 and a disk portion 12 provided at the outer end in the vehicle width direction of the rim portion 11. The rim portion 11 is in a cylindrical shape. The disk portion 12 is in a disk shape. A tire 13 is mounted on the outer circumference of the rim portion 11.

The in-wheel motor 20 is housed in the inner space of the wheel 10, which is enclosed by the rim portion 11 and the disk portion 12, and imparts rotational power to the wheel 10. The in-wheel motor 20 is an outer-rotor type motor including a rotor 30 and a stator 40 disposed radially inside the rotor 30.

The rotor 30 includes a magnet holding portion 31 and a magnet unit 32 provided on the inner circumferential surface of the magnet holding portion 31. The magnetic holding portion 31 is in a cylindrical shape. In the magnet holding portion 31, from the outer end to the inner end in the axial direction (vehicle width direction) of the in-wheel motor 20, it faces the inner circumferential surface of the rim portion 11. The magnet unit 32 has a cylindrical shape concentric with the rotational center axis of the rotor 30, and includes multiple magnets fixed to the inner circumferential surface of the magnet holding portion 31. That is, the in-wheel motor 20 of the present embodiment is a surface permanent magnet synchronous machine (SPMSM). In the magnet unit 32, the magnets are arranged along the circumferential direction of the rotor 30 so that their polarities alternate. As a result, multiple magnetic poles are formed in the magnet unit 32 in the circumferential direction. The magnets are, for example, sintered neodymium magnets. Incidentally, the in-wheel motor 20 may also be an interior permanent magnet synchronous machine (IPMSM).

The rotor 30 is provided at the outer end in the vehicle width direction of the magnet holding portion 31, and includes a flat plate portion 33 that connects the magnet holding portion 31 and the disk portion 12. The flat plate portion 22 is in a disk shape. The disk portion 12 is fixed to the flat plate portion 33 with bolts. As a result, the rotor 30 and the wheel 10 rotate together as a unit.

The stator 40 includes a stator winding 41 disposed at a position facing the magnet unit 32 in the radial direction, and a stator base portion 42 provided on the radially inner side of the stator winding 41. The stator winding 41 is in a cylindrical shape. The stator base portion 42 is in a cylindrical shape. The stator winding 41 includes a coil side portion provided at a position facing the magnet unit 32 in the radial direction, and coil end portions provided at both axial ends of the coil side portion.

The stator base portion 42 is fixed to the vehicle body via, for example, a knuckle or the like, and holds the stator winding 41 and the like. The stator base portion 42 includes a cylindrical section 43 fixed to the vehicle body. Of the cylindrical section 43, the portion adjacent to the stator winding 41 in the radial direction serves as a stator core 43a.

The stator base portion 42 includes a fixing portion 44 that extends radially inward from one axial end of the cylindrical section 43. The fixing portion 44 and the bearing 50 support the rotor 30 so as to be rotatable with respect to the stator base portion 42. The radially outer end portion of the fixing portion 44 is formed as an annular protrusion projecting toward the flat plate portion 33. The portion of a protrusion 45 facing the flat plate portion 33 is formed as a flat surface.

The bearing 50 is a rolling bearing (for example, a radial ball bearing) and includes an outer ring 51 corresponding to a first bearing member, an inner ring 52 corresponding to a second bearing member, and multiple rolling elements 53 (for example, balls) disposed between the outer ring 51 and the inner ring 52. The outer ring 51 is fixed to the fixing portion 44 by bolts. The inner ring 52 includes a cylindrical portion 52a that faces the outer ring 51 in the radial direction, and a flange portion 52b that extends radially outward from one axial end of the cylindrical portion 52a. The flange portion 52b is fixed to the flat plate portion 33 and the disk portion 12 by bolts. It should be noted that FIG. 1 shows a state in which the inner ring 52 and the outer ring 51 are coaxial.

The vehicle is provided with an inverter electrically connected to the stator winding 41, and a direct current power supply electrically connected to the inverter. The direct current power supply is provided in the vehicle body and is, for example, a rechargeable battery such as a lithium-ion battery. The switching control of the upper and lower arm switches constituting the inverter is performed by the control device. As a result, the rotor 30 rotates, and the wheels rotate. The inverter and the control device may be provided in the vehicle body or may be built into the in-wheel motor 20. The direct current power supply may also be, for example, a fuel cell.

A target rotor 80 and a detection unit 90 are provided in the inner space of the wheel 10. The target rotor 80 is in a disk shape. The target rotor 80 and the detection unit 90 are used to calculate the rotational angle of the rotor 30 of the in-wheel motor 20 (specifically, the electrical angle or mechanical angle), the rotational speed of the wheel, the lateral force Fy acting between the ground surface (road surface) GL and the wheel (tire 13), and the force acting perpendicularly between the ground surface GL and the wheel with respect to the ground surface GL (hereinafter referred to as the vertical load Fz). The direction in which the lateral force acts and the direction in which the vertical load acts are perpendicular to each other. For example, the calculated rotational angle (electrical angle) is used for switching control of the inverter in the control device, while the wheel rotational speed, lateral force, and vertical load are used for vehicle running control in the control device.

As shown in FIGS. 1 to 3, the target rotor 80 is made of a metallic material (for example, iron or aluminum). A through-hole 80a is formed in the central part of the target rotor 80. A cylindrical portion 52a of the bearing 50 is fitted into the through-hole 80a. The target rotor 80 is fixed to the flange portion 52b of the inner ring 52 by bolts, in a state where the target rotor 80 is separated from the flat plate portion 33 of the rotor 30 and is in surface contact with the flange portion 52b. As a result, the target rotor 80 and the inner ring 52 are coaxially aligned. The target rotor 80, the rotor 30, and the wheel 10 rotate together as a unit.

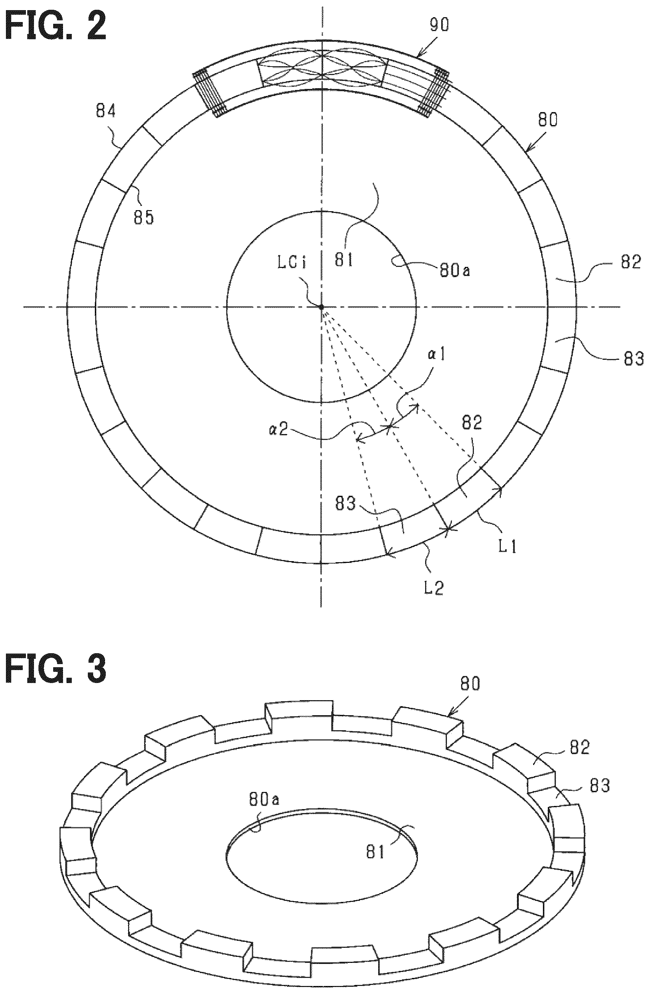

At the radially outer end portion of the target rotor 80, a protrusion 82 and a recess 83 are alternatively provided in the circumferential direction. The protrusion 82 projects in the axial direction of the inner ring 52 from the flat surface 81 of the target rotor 80, and a recess 83 projects in the axial direction from the flat surface 81 and is recessed in the axial direction of the inner ring 52 relative to the protrusion 82, are alternately provided in the circumferential direction. The protrusions 82 and recesses 83 face the protrusion 45 of the stator base portion 42. The protrusions 82 and recesses 83 together form an annular "detection target portion." In the example shown in FIG. 2, twelve pairs of protrusions 82 and recesses 83 are provided.

In FIG. 2, LCi indicates the central axis of the inner ring 52. In the present embodiment, the angle α1 formed between the central axis LCi and a line passing through one circumferential end of the protrusion 82 and the central axis LCi and a line passing through the other circumferential end of the protrusion 82 is equal to the angle α2 formed between the central axis LCi and a line passing through one circumferential end of the recess 83 and the central axis LCi and a line passing through the other circumferential end of the recess 83. Therefore, the circumferential length L1 of the protrusion 82 and the circumferential length L2 of the recess 83 are equal.

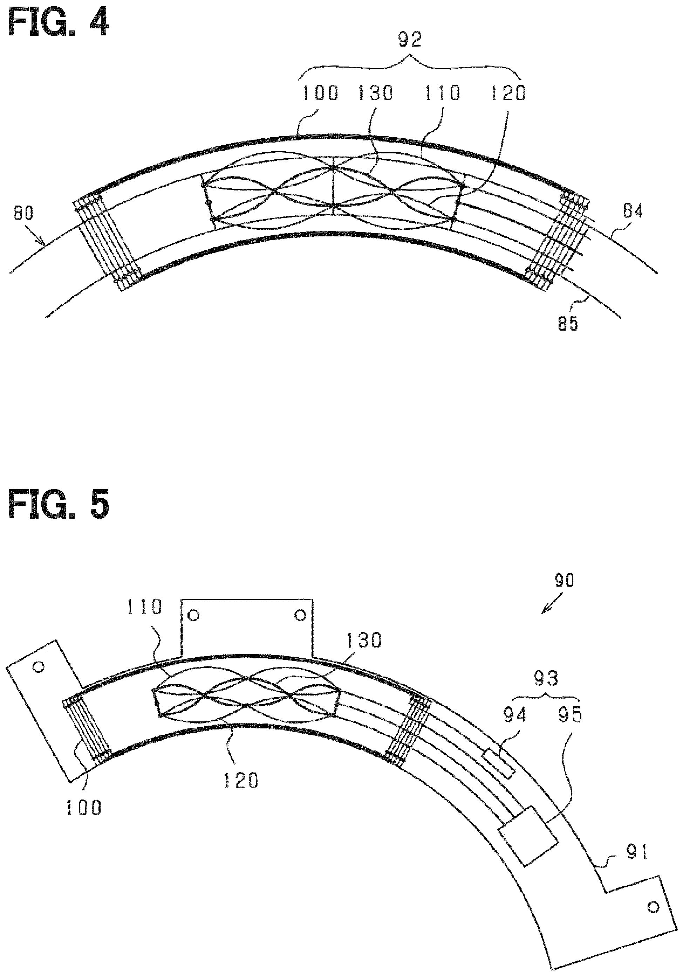

The detection unit 90 is a so-called eddy current type inductive sensor. As shown in FIGS. 2 and 4 to 6, the detection unit 90 includes a substrate 91, a coil unit 92 provided on the substrate 91, and a circuit unit 93. FIG. 2 is a view showing the target rotor 80 as seen from the vehicle width direction inner side. In FIG. 2, the substrate 91 and the like are omitted from illustration. FIG. 4 is an enlarged view of the vicinity of the coil unit 92 in FIG. 2. FIG. 5 is a view showing the substrate 91 as seen from the vehicle width direction inner side. The substrate 91 is fixed to the flat surface of the protrusion 45. As a result, the substrate 91 extends in a direction perpendicular to the axial direction of the outer ring 51. In the present embodiment, the substrate 91 is fixed to the flat surface at the upper end of the annular protrusion 45.

The coil unit 92 includes an excitation coil 100 and a receiving coil. In the present embodiment, the receiving coil consists of an outer coil 110, an inner coil 120, and an intermediate coil 130. Each of the coils 100, 110, 120, and 130 is a planar coil. The substrate 91 is a multilayer substrate. Each of the coils 100, 110, 120, and 130 is formed by wiring patterns and vias or the like provided on respective layers of the substrate 91. Since each of the coils 100, 110, 120, and 130 is a planar coil, it is easy to arrange the coils even in cases where a large space in the axial direction cannot be secured within the inner space of the wheel 10.

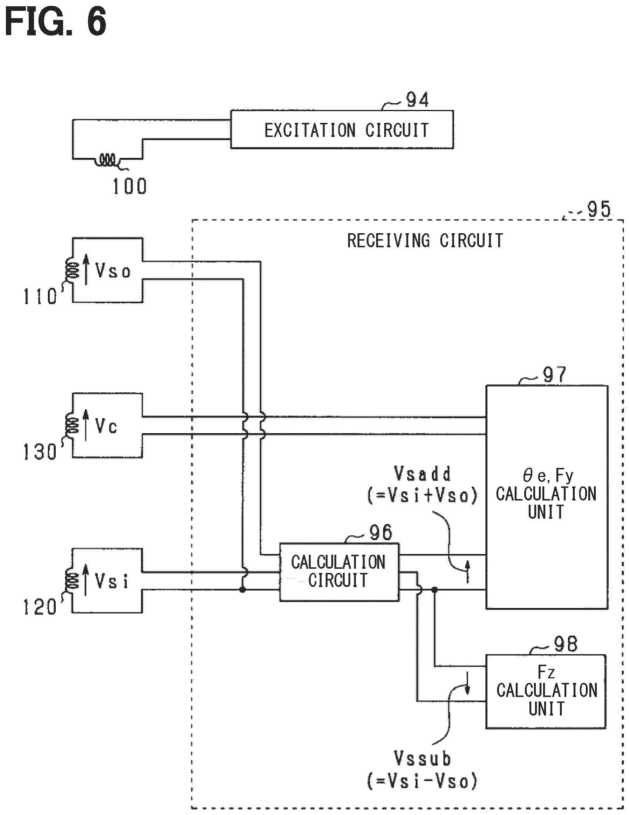

The circuit unit 93 is constituted by an integrated circuit. As shown in FIGS. 5 and 6, the circuit unit 93 includes an excitation circuit 94 that supplies a high-frequency excitation voltage to the excitation coil 100, and a receiving circuit 95. When an excitation voltage is supplied to the excitation coil 100, an excitation current flows through the excitation coil 100, and a voltage having the same or substantially the same frequency as the excitation voltage is induced in each of the coils 110, 120, and 130. The receiving circuit 95 detects the voltage signals at both ends of each of the coils 110, 120, and 130. Specifically, the receiving circuit 95 detects the potential difference between both ends of the outer coil 110 as an outer voltage signal Vso, the potential difference between both ends of the inner coil 120 as an inner voltage signal Vsi, and the potential difference between both ends of the intermediate coil 130 as an intermediate voltage signal Vc.

As shown in FIG. 1, the circuit unit 93 of the detection unit 90 is electrically connected to the processing unit 70. Specifically, an insertion hole 46 is formed in the protrusion 45, and the processing unit 70 and the circuit unit 93 are electrically connected via wiring that passes through the insertion hole 46. It should be noted that the processing unit 70 may be provided on the vehicle body or may be built into the in-wheel motor 20.

It should be noted that the circuit unit 93 and the processing unit 70 are configured mainly using, for example, a microcontroller. The functions provided by the microcontrollers of the circuit unit 93 and the processing unit 70 can be implemented by software recorded on a physical memory device and a computer that executes the software, by software alone, by hardware alone, or by a combination thereof. For example, when the microcontroller is implemented by an electronic circuit as hardware, it may be provided by a digital circuit including multiple logic circuits, or by an analog circuit. For example, the microcontroller executes a program stored in a non-transitory tangible recording medium, which serves as its own storage unit. When the program is executed, the method corresponding to the program is carried out. The storage unit is, for example, a non-volatile memory. It should be noted that the program stored in the storage unit can be updated via a network such as the Internet, for example, by means of OTA (Over The Air) or the like.

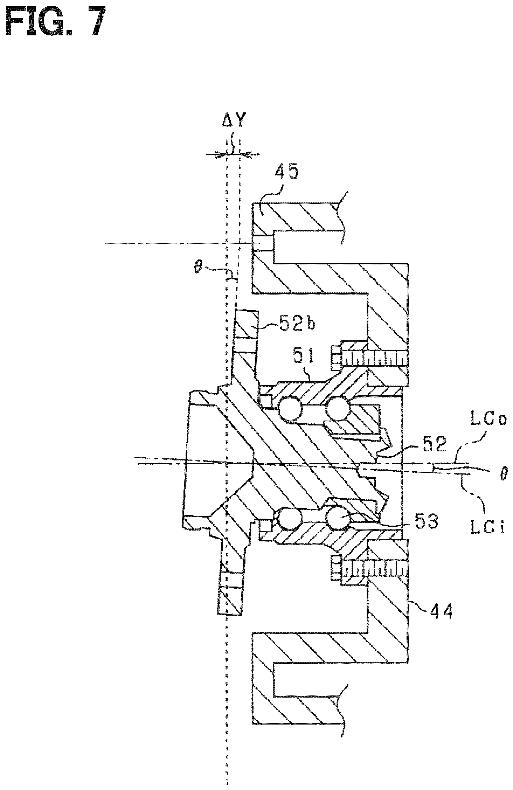

As shown in FIG. 1, when a lateral force Fy acts on the wheel, the inclination angle θ of the center axis LCi of the inner ring 52 with respect to the center axis LCo of the outer ring 51 increases, as shown in FIG. 7. In this case, the axial distance between each of the coils 110, 120, 130 and the target rotor 80 changes, resulting in a change in the amplitude of the output voltage signal of each coil 110, 120, 130. The detection unit 90 calculates the axial displacement ΔY of the target rotor 80 based on this change in amplitude, and calculates the lateral force Fy based on the calculated axial displacement ΔY.

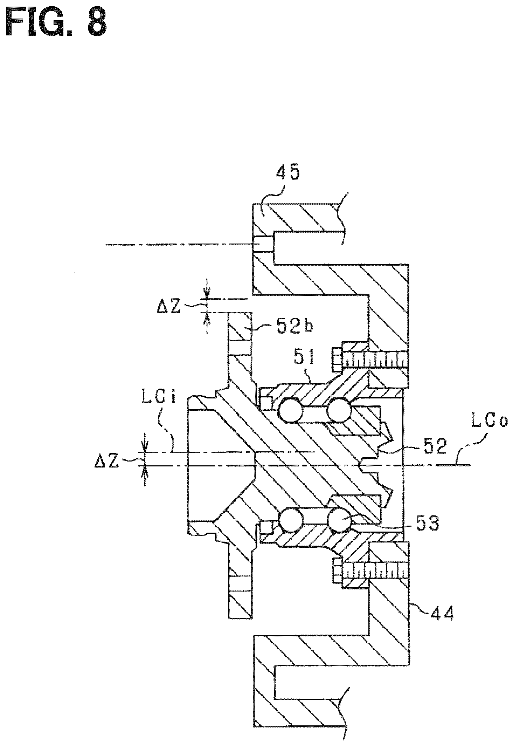

On the other hand, when a vertical load Fz acts on the wheel, as shown in FIG. 8, the center axis LCi of the inner ring 52 is displaced in a direction perpendicular to the center axis LCo of the outer ring 51. As a result, the target rotor 80 fixed to the flange portion 52b is also displaced. In this case, the detection unit 90 is configured so that the amplitudes of the output voltage signals of the outer coil 110 and the inner coil 120 change. This configuration will be described in detail later. The detection unit 90 calculates the displacement of the target rotor 80 in the direction perpendicular to the axial direction and the vehicle longitudinal direction (hereinafter referred to as vertical displacement ΔZ) based on this amplitude change, and calculates the vertical load Fz based on the calculated vertical displacement ΔZ.

As shown in FIG. 4, the outer coil 110, inner coil 120, and intermediate coil 130 are provided in a region surrounded by the excitation coil 100, in a plan view of the substrate 91. The excitation coil 100 is a planar coil having multiple turns and is formed in an arc shape extending in the circumferential direction of the outer ring 51.

The outer coil 110, inner coil 120, and intermediate coil 130, when excitation voltage is supplied to the excitation coil 100, each include a first section that generates a voltage of a first polarity between both ends of the coil, and a second section that generates a voltage of a second polarity, which is opposite to the first polarity.

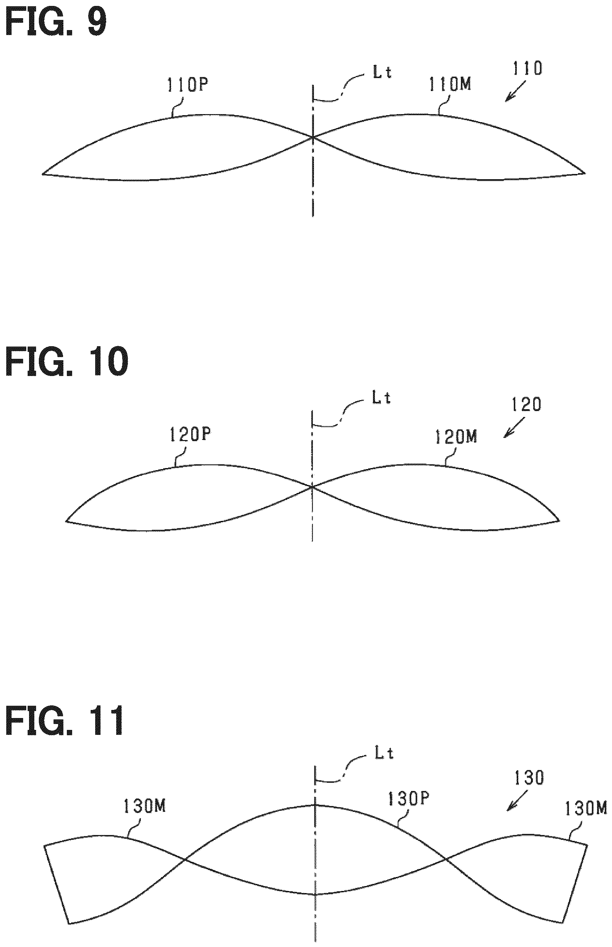

Specifically, as shown in FIG. 9, the outer coil 110 is composed of a first section 110P and a second section 110M. In a plan view of the substrate 91, one side of the central circumferential axis Lt of the outer coil 110 is defined as the first section 110P, while the other side is defined as the second section 110M. The central axis Lt is an axis extending in the radial direction and passes through the center axis LCi. The first section 110P and the second section 110M are arranged side by side in the circumferential direction. The first section 110P has a shape that is symmetrical to the shape of the second section 110M with respect to the central axis Lt.

As shown in FIG. 10, the inner coil 120 is composed of a first section 120P and a second section 120M. In the present embodiment, the inner coil 120 has a shape similar to that of the outer coil 110. Therefore, a detailed description of the inner coil 120 will be omitted.

As shown in FIG. 11, the intermediate coil 130 is composed of a first section 130P and a second section 130M. In a plan view of the substrate 91, the first section 130P and second section 130M on one side, and the first section 130P and second section 130M on the other side, are each symmetrically shaped with respect to the central circumferential axis Lt of the intermediate coil 130. In the present embodiment, the radial length of the intermediate coil 130 is greater than the radial lengths of the outer coil 110 and the inner coil 120. Further, the circumferential lengths of the respective coils 110, 120, and 130 are equal.

In each of the coils 110, 120, and 130, the circumferential length from the central axis Lt to the circumferential end is the same as the total circumferential length (L1 + L2) of the protrusion 82 and the recess 83. Further, as shown in FIG. 4, in a plan view of the substrate 91, the circumferential end positions of each of the coils 110, 120, and 130 are the same.

As shown in FIG. 4, in a plan view of the substrate 91, the radially outer end of the outer coil 110 in the reference state protrudes radially outward beyond the radially outer end 84 of the protrusion 82 and the recess 83. The reference state can be set arbitrarily. The reference state refers to, for example, a state in which the vehicle is stopped, specifically, for instance, when the vehicle is stopped on a level road surface.

In a plan view of the substrate 91, the radially inner end of the outer coil 110 and the radially outer end of the inner coil 120 in the reference state are positioned between the radially outer end 84 and the radially inner end 85 of the protrusion 82 and the recess 83.

In a plan view of the substrate 91, the radially inner end of the inner coil 120 in the reference state protrudes radially inward beyond the radially inner end 85 of the protrusion 82 and the recess 83.

In the present embodiment, the radially inner portion of the outer coil 110 and the radially outer portion of the intermediate coil 130 overlap with each other in a plan view of the substrate 91. Further, the radially inner portion of the intermediate coil 130 and the radially outer portion of the inner coil 120 overlap with each other in a plan view of the substrate 91. As a result, the radial length of the substrate 91 is reduced.

Next, the principle by which the displacement and rotation angle can be detected by the detection unit 90 will be explained.

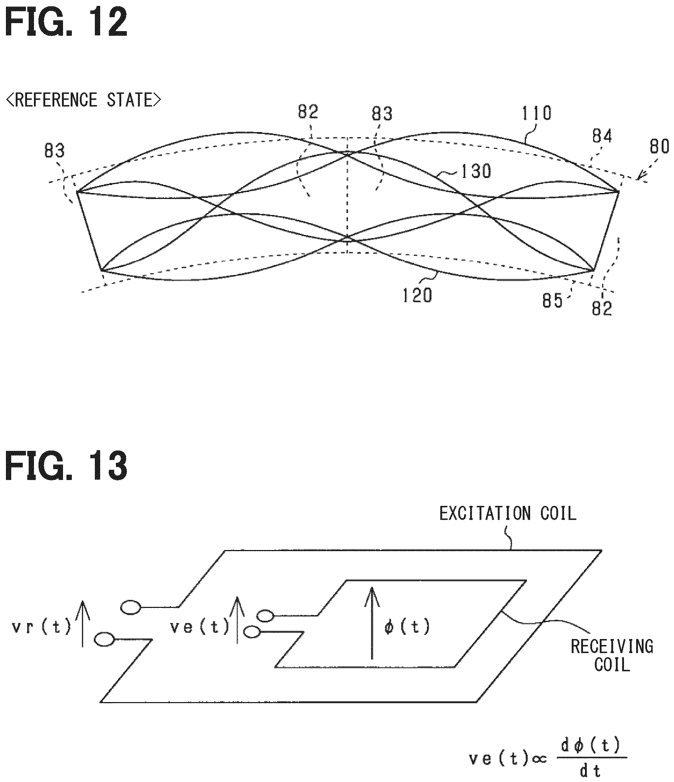

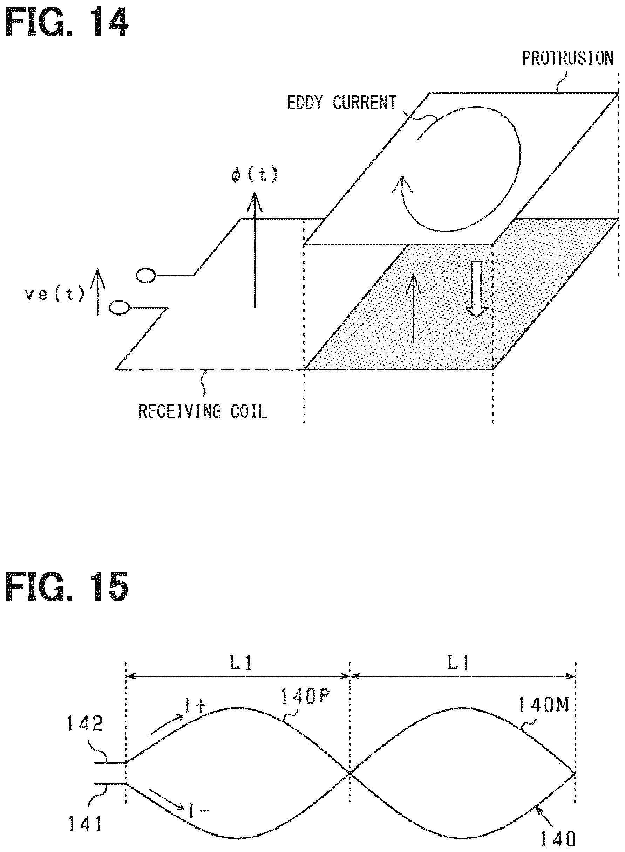

First, an overview of this principle will be explained with reference to FIGS. 13 and 14. As shown in FIG. 13, when a high-frequency excitation voltage vr(t) is supplied to the excitation coil, a high-frequency current flows through the excitation coil. This current generates a magnetic flux φ(t), and the magnetic flux φ(t) links with the receiving coil. At both ends of the receiving coil, a voltage ve(t) proportional to the time rate of change of the linked magnetic flux is induced.

FIG. 14 shows a state in which the protrusion 82 of the target rotor 80 is opposed to a part of the receiving coil in the radial direction. In the portion of the protrusion 82 that faces the receiving coil, an eddy current flows due to the linked magnetic flux resulting from the energization of the excitation coil. Due to this eddy current, a magnetic flux is generated in a direction that reduces the magnetic flux responsible for generating the induced voltage in the receiving coil, thereby decreasing the amplitude of the induced voltage in the receiving coil. In other words, the amplitude of the potential difference across both ends of the receiving coil is proportional to the area of the receiving coil that does not face the protrusion 82 in the radial direction.

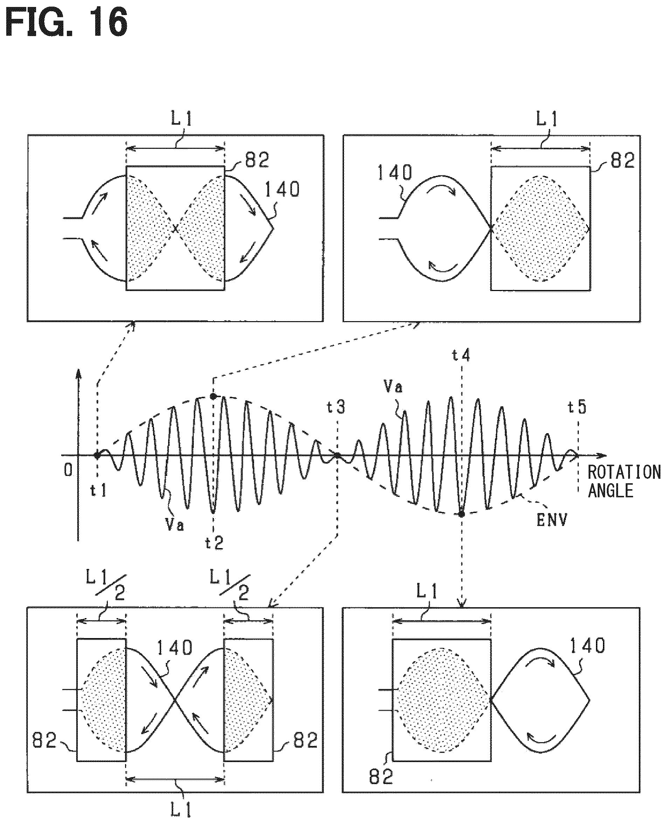

Based on the explanations of FIGS. 13 and 14, the detection principles of displacement and rotation angle will be described with reference to FIGS. 15 and 16. FIGS. 15 and 16 are diagrams showing the receiving coil 140 and the protrusion 82 with the circumferential direction depicted as a straight line. FIG. 16 is a diagram showing the relative positional relationship between the receiving coil 140 and the protrusion 82, as well as the transition of the output voltage signal Va of the receiving coil 140.

In FIGS. 15 and 16, the direction in which current flows from the second end 142 to the first end 141 of the receiving coil 140 is referred to as the positive direction (I+), and the direction in which current flows from the first end 141 to the second end 142 is referred to as the negative direction (I-). In addition, in FIGS. 15 and 16, magnetic flux from the excitation coil 100 passes from the front side to the back side of the page.

At time t1 in FIG. 16, half of the center side of the first portion 140P of the receiving coil 140 and half of the center side of the second portion 140M of the receiving coil 140 are facing the protrusion 82 in the axial direction. A voltage is induced in the first portion 140P so as to cause current to flow in the positive direction, and a voltage is induced in the second portion 140M so as to cause current to flow in the negative direction. As a result, the induced voltage generated in the first portion 140P and the induced voltage generated in the second portion 140M cancel each other out, and the amplitude of the output voltage signal Va becomes zero.

At time t2, of the first portion 140P and the second portion 140M, the second portion 140M faces the protrusion 82. In this case, a voltage is induced in the first portion 140P so as to cause current to flow in the positive direction, and the induced voltage in the second portion 140M becomes zero. As a result, the amplitude of the output voltage signal Va reaches its maximum value on the first polarity (positive polarity) side. This maximum value increases as the protrusion 82 of the target rotor 80 approaches the receiving coil 140.

At time t3, half of the end portion of the first portion 140P and half of the end portion of the second portion 140M face the protrusion 82. A voltage is induced in the first portion 140P so as to cause current to flow in the positive direction, and a voltage is induced in the second portion 140M so as to cause current to flow in the negative direction. As a result, the induced voltage generated in the first portion 140P and the induced voltage generated in the second portion 140M cancel each other out, so that the amplitude of the output voltage signal Va becomes zero.

At time t4, among the first portion 140P and the second portion 140M, the first portion 140P faces the protrusion 82. In this case, a voltage is induced in the second portion 140M so as to cause current to flow in the negative direction, and the induced voltage of the first portion 140P becomes zero. As a result, the amplitude of the output voltage signal Va reaches its maximum value on the second polarity (negative polarity) side, which is opposite to the first polarity. This maximum value increases as the protrusion 82 approaches the receiving coil 140.

In the present embodiment, the protrusions 82 and recesses 83 are alternately formed at the radially outer end of the target rotor 80. Therefore, during the rotation of the rotor 30, the amplitude of the output voltage signal Va of the receiving coil 140 changes periodically, and as indicated by the broken line in FIG. 16, the envelope ENV of the output voltage signal Va becomes sinusoidal. In the present embodiment, since the circumferential interval of the magnetic pole positions of the magnet unit 32 and the circumferential lengths of the protrusions 82 and recesses 83 are set in relation to each other, it is possible to associate the amplitude or envelope ENV of the output voltage signal Va with the electrical angle θe.

In the present embodiment, when the excitation voltage is supplied to the excitation coil 100, the phase difference between the outer voltage signal Vso output from the outer coil 110 and the inner voltage signal Vsi output from the inner coil 120 is 0 degrees. Further, when the excitation voltage is supplied to the excitation coil 100, the phase difference between the outer voltage signal Vso and the inner voltage signal Vsi with respect to the intermediate voltage signal Vc output from the intermediate coil 130 is 90 degrees. Therefore, the phase difference between the envelope of the outer voltage signal Vso (or the inner voltage signal Vsi) and the envelope of the intermediate voltage signal Vc is also 90 degrees.

In the present embodiment, the amplitude of the outer voltage signal Vso is equal to the amplitude of the inner voltage signal Vsi. Furthermore, the amplitude of the outer voltage signal Vso is smaller than the amplitude of the intermediate voltage signal Vc. This is because, as shown in FIG. 12, in a plan view of the substrate 91, the area enclosed by the intermediate coil 130 is larger than the area enclosed by the outer coil 110.

A case will be described in which the lateral force acting on the wheel changes.

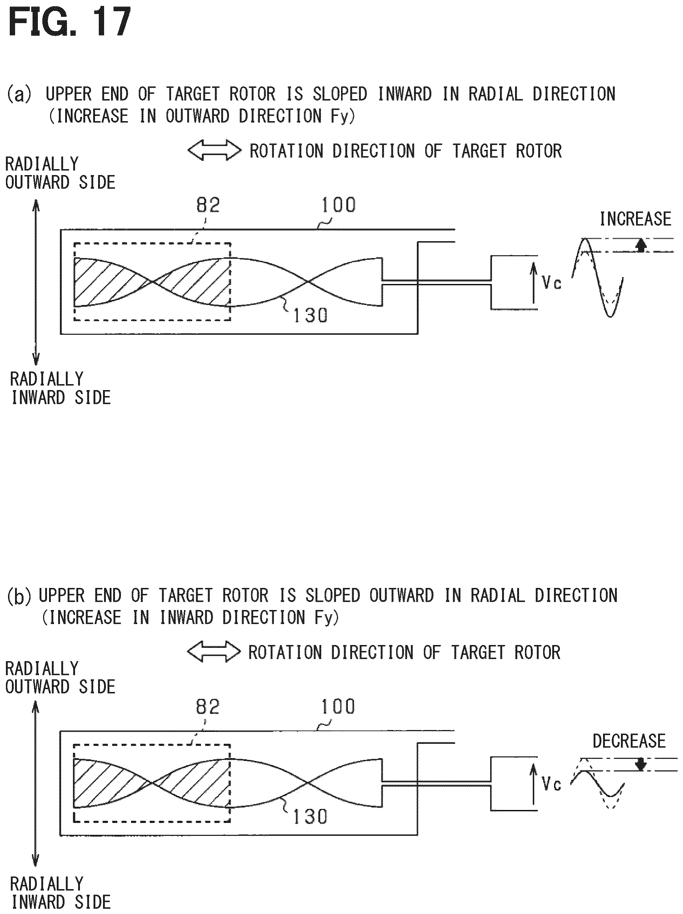

When the direction of the lateral force is toward the outer side of the vehicle width direction, the inner ring 52 tilts to the outer ring 51 such that the upper end of the target rotor 80 approaches the stator base portion 42, and the lower end approaches the wheel 10. In this case, the axial displacement ΔY of the target rotor 80 is defined as positive. As the axial displacement ΔY increases in the positive direction, the amplitude of the intermediate voltage signal Vc output from the intermediate coil 130 increases, as indicated by the solid line in FIG. 17(a). It should be noted that, in FIG. 17(a), the intermediate voltage signal Vc indicated by the broken line represents the intermediate voltage signal Vc in the reference state. FIG. 17 is a diagram in which the excitation coil 100, the intermediate coil 130, and the protrusions 82 are shown with the circumferential direction depicted as a straight line. In the figure, the hatched portion indicates the part of the intermediate coil 130 that faces the protrusion 82 in the radial direction.

When the direction of the lateral force is toward the inner side of the vehicle width direction, the inner ring 52 tilts the outer ring 51 such that the lower end of the target rotor 80 approaches the stator base portion 42 side and the upper end approaches the wheel 10 side. In this case, the axial displacement ΔY is defined as negative. As the axial displacement ΔY increases in the negative direction, the amplitude of the intermediate voltage signal Vc decreases, as shown by the solid line in FIG. 17(b). In FIG. 17(b), the intermediate voltage signal Vc indicated by the dashed line represents the intermediate voltage signal Vc in the reference state.

Next, a description will be given of a case where the vertical load acting on the wheel changes.

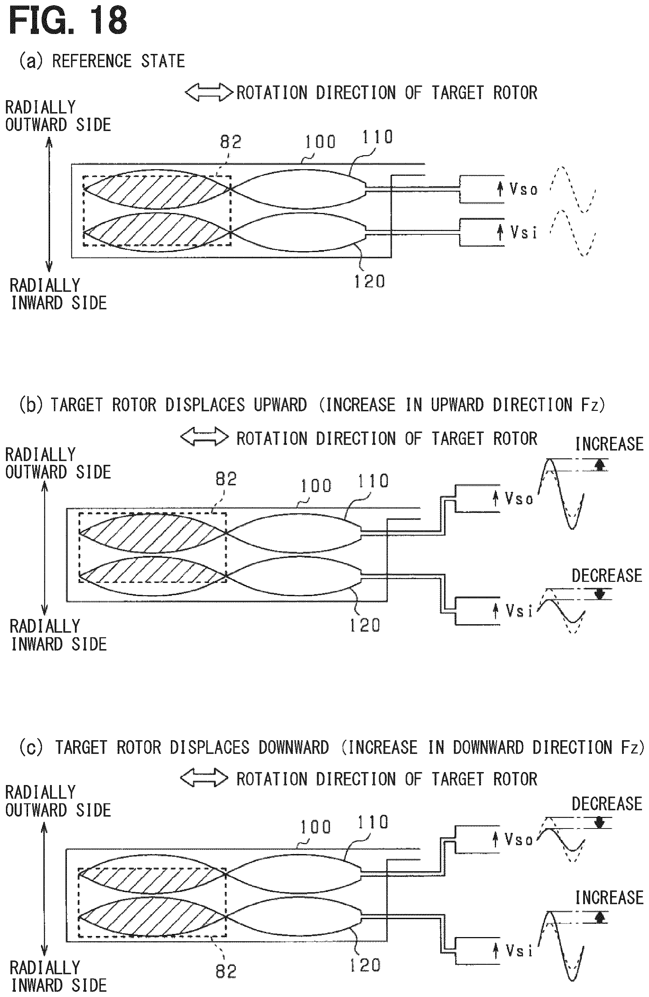

FIG. 18(a) shows the relative positional relationship among the outer coil 110, the inner coil 120, and the protrusion 82 in the reference state. FIG. 18 is a diagram in which the excitation coil 100, the outer coil 110, the inner coil 120, and the protrusion 82 are shown with the circumferential direction depicted as a straight line. In the figure, the portions indicated by hatching represent the areas of each of the coils 110 and 120 that face the protrusion 82 in the radial direction. In FIG. 18, the voltage signals Vso and Vsi indicated by broken lines are the voltage signals Vso and Vsi in the reference state.

When the upward vertical load increases, the upper end of the target rotor 80 is displaced upward. In this case, the vertical displacement ΔZ of the target rotor 80 is defined as positive. As the vertical displacement ΔZ increases in the positive direction, the amplitude of the outer voltage signal Vso output from the outer coil 110 increases, while the amplitude of the inner voltage signal Vsi output from the inner coil 120 decreases, as indicated by the solid lines in FIG. 18(b). The reason the amplitude of the outer voltage signal Vso increases is that, as the target rotor 80 is displaced upward, the area of the outer coil 110 facing the protrusion 82 increases. The reason the amplitude of the inner voltage signal Vsi decreases is that, as the target rotor 80 is displaced upward, the area of the inner coil 120 facing the protrusion 82 decreases.

On the other hand, when the downward vertical load increases, the upper end of the target rotor 80 is displaced downward. In this case, the vertical displacement ΔZ is considered negative. As the vertical displacement ΔZ increases in the negative direction, the amplitude of the outer voltage signal Vso decreases and the amplitude of the inner voltage signal Vsi increases, as indicated by the solid line in FIG. 18(c). The reason the amplitude of the outer voltage signal Vso decreases is that, as the target rotor 80 is displaced downward, the area of the outer coil 110 facing the protrusion 82 decreases. The reason the amplitude of the inner voltage signal Vsi increases is that, as the target rotor 80 is displaced downward, the area of the inner coil 120 facing the protrusion 82 increases.

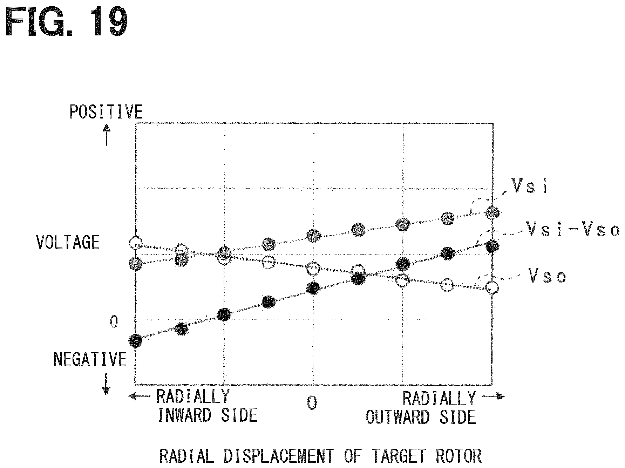

From the above, it is possible to calculate the vertical displacement ΔZ (that is, the vertical load Fz) based on either the outer voltage signal Vso or the inner voltage signal Vsi. Here, in the present embodiment, the receiving circuit 95 calculates the vertical load Fz based on the differential voltage Vssub, which is the value obtained by subtracting the outer voltage signal Vso from the inner voltage signal Vsi. This calculation method is a means for improving the calculation accuracy of the vertical load Fz. That is, as shown in FIG. 19, within the range of possible radial (vertical) displacement of the target rotor 80, the variation range of the differential voltage Vssub is greater than the variation ranges of the outer voltage signal Vso and the inner voltage signal Vsi. This is because the direction of change in amplitude of the outer voltage signal Vso with respect to vertical displacement of the target rotor 80 is opposite to the direction of change in amplitude of the inner voltage signal Vsi with respect to the same displacement. In the present embodiment, it is assumed that the amplitude of the differential voltage Vssub is the same as the amplitude of the intermediate voltage signal Vc.

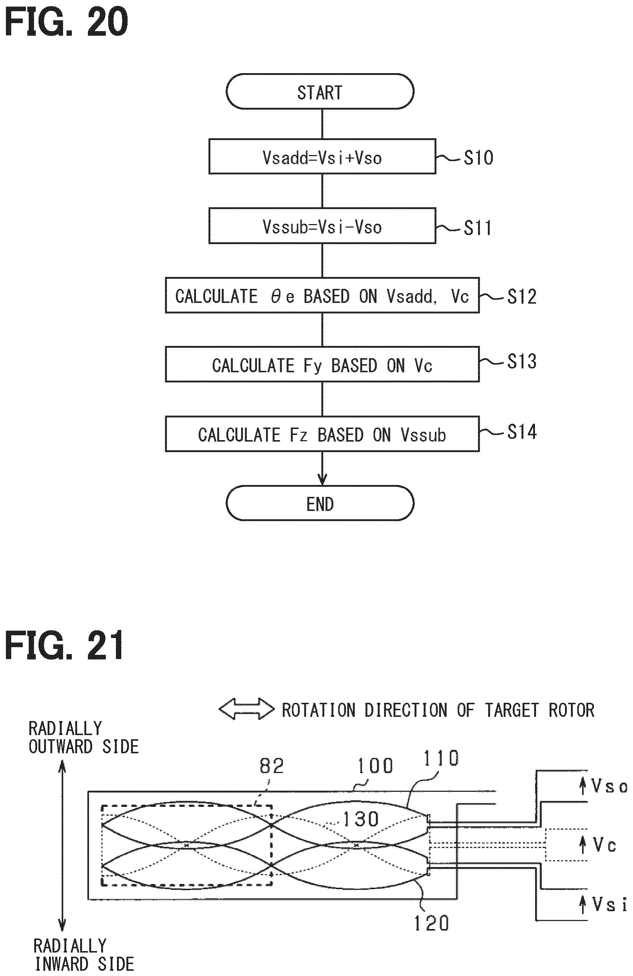

The procedure of the calculation processing in the receiving circuit 95 will be explained with reference to FIG. 20 and FIG. 6. This processing is repeatedly executed at a predetermined control cycle, for example.

In step S10, a calculation circuit 96 of the receiving circuit 95 calculates a sum voltage Vsadd by adding the outer voltage signal Vso to the inner voltage signal Vsi. It should be noted that, in the present embodiment, the processing in step S10 corresponds to the "sum voltage calculation unit."

In step S11, the calculation circuit 96 calculates a differential voltage Vssub by subtracting the outer voltage signal Vso from the inner voltage signal Vsi. It should be noted that, in the present embodiment, the processing in step S11 corresponds to the "differential voltage calculation unit."

In step S12, a lateral force angle calculation unit 97 of the receiving circuit 95 calculates the electrical angle θe based on the calculated sum voltage Vsadd and the intermediate voltage signal Vc. The following describes an example of a method for calculating the electrical angle θe.

The lateral force angle calculation unit 97 calculates the envelope of the sum voltage Vsadd and the envelope of the intermediate voltage signal Vc. The lateral force angle calculation unit 97 calculates the electrical angle θe by performing an arctangent operation on the ratio of the envelope of the sum voltage Vsadd to the envelope of the intermediate voltage signal Vc. It should be noted that, in the present embodiment, the processing in step S12 corresponds to the "angle calculation unit."

It should be noted that the lateral force angle calculation unit 97 may also calculate the rotational speed of the wheel based on the time derivative of the calculated electrical angle.

In step S13, the lateral force angle calculation unit 97 calculates the lateral force Fy based on the intermediate voltage signal Vc. The following describes an example of a method for calculating the lateral force Fy.

The lateral force angle calculation unit 97 calculates the envelope of the intermediate voltage signal Vc. The lateral force angle calculation unit 97 calculates, as an axial displacement signal, the deviation amount of the amplitude of the envelope of the calculated intermediate voltage signal Vc with respect to the amplitude of the envelope of the intermediate voltage signal Vc in a reference state. The axial displacement signal is updated each time the maximum amplitude value on the positive polarity side or the maximum amplitude value on the negative polarity side of the intermediate voltage signal Vc appears. In other words, when the rotational speed of the rotor 30 is constant, the axial displacement signal is updated every 180 electrical degrees. The lateral force angle calculation unit 97 calculates the lateral force Fy based on map information or equation information that associates the axial displacement signal with the lateral force Fy.

In step S14, a vertical load calculation unit 98 of the receiving circuit 95 calculates the vertical load Fz based on the calculated differential voltage Vssub. The following describes an example of a method for calculating the vertical load Fz.

The vertical load calculation unit 98 calculates the envelope of the differential voltage Vssub. The vertical load calculation unit 98 calculates the amount of deviation in the amplitude of the envelope of the calculated differential voltage Vssub, with respect to the amplitude of the envelope of the differential voltage Vssub in the reference state, as a vertical displacement signal. The vertical displacement signal is updated each time the maximum amplitude value on the positive polarity side or the maximum amplitude value on the negative polarity side of the differential voltage Vssub appears. In other words, when the rotational speed of the rotor 30 is constant, the vertical displacement signal is updated every 180 electrical degrees. The vertical load calculation unit 98 calculates the vertical load Fz based on map information or mathematical formula information that associates the vertical displacement signal with the vertical load Fz. It should be noted that, in the present embodiment, the processing of step S14 corresponds to the "force calculation unit."

It should be noted that the above-mentioned map information or mathematical formula information used in steps S13 and S14 may be stored, for example, in a storage unit (such as non-volatile memory) provided in the receiving circuit 95. Furthermore, in the configuration where the output voltage signals of each coil 110, 120, and 130 are provided to the processing unit 70, the processing shown in FIG. 20 may be executed by the processing unit 70 instead of by the receiving circuit 95.

In the processing of step S14, since the difference voltage Vssub with increased amplitude is used to calculate the vertical load Fz, the calculation accuracy of the vertical load Fz can be improved.

According to the present embodiment described above, the following additional effects can also be achieved.

With a single detection unit 90, it is possible to calculate not only the load acting on the wheel but also the rotational speed and electrical angle of the wheel. Therefore, the number of in-vehicle sensors can be reduced.

Of the stator base portion 42, the detection unit 90 is provided at a position that is radially separated from the bearing 50 and axially opposed to the radial end of the target rotor 80. The portion of the target rotor 80 that faces the detection unit 90 in the axial direction is a part that is radially outwardly separated from the bearing 50. Therefore, when a lateral force acts on the wheel, the axial displacement of the portion of the target rotor 80 that faces the detection unit 90 in the axial direction can be increased. As a result, the detection accuracy of the axial displacement ΔY can be improved, and consequently, the calculation accuracy of the lateral force Fy on the wheel, which constitutes the unsprung mass of the vehicle, can also be enhanced.

Because the in-wheel motor 20 is configured as an outer rotor type, the radial end of the target rotor 80 can be positioned at a location significantly radially separated from the bearing 50. As a result, the calculation accuracy of the lateral force Fy can be improved.

Each of the coils 100, 110, 120, and 130 is provided on the wheel 10 side in the axial direction relative to the coil end portion constituting the stator winding 41. As a result, it is possible to suppress the influence of noise and the like generated by energization of the stator winding 41 on the excitation voltage of the excitation coil 100 and the induced voltages of the coils 110, 120, and 130. As a result, the calculation accuracy of the electrical angle θe, lateral force Fy, and vertical load Fz can be improved.

### (Modified Example of First Embodiment)

In a plan view of the substrate 91, the outer coil 110 and the intermediate coil 130 may be spaced apart from each other in the radial direction, and the intermediate coil 130 and the inner coil 120 may also be spaced apart from each other in the radial direction.

The shapes of the outer coil 110 and the inner coil 120 are not limited to those shown in FIGS. 9 and 10, and may, for example, be the shapes shown in FIG. 11. Furthermore, the shape of the intermediate coil 130 is not limited to the shape shown in FIG. 11, and may, for example, be the shape shown in FIG. 9. In this case, the shapes of the three coils 110, 120, and 130 may be the same. In this case, the phases of the outer voltage signal Vso, the inner voltage signal Vsi, and the intermediate voltage signal Vc become the same.

### (Second Embodiment)

A second embodiment will be described below, focusing on the differences from the first embodiment, with reference to the drawings. In the present embodiment, as shown in FIG. 21, in a plan view of the substrate 91, the radially inner portion of the outer coil 110 and the radially outer portion of the inner coil 120 overlap with each other. FIG. 21 is a diagram showing the excitation coil 100, the outer coil 110, the inner coil 120, and the protrusion 82 with the circumferential direction depicted as a straight line.

According to the present embodiment, it is possible to reduce the radial length of the substrate 91.

### (Third Embodiment)

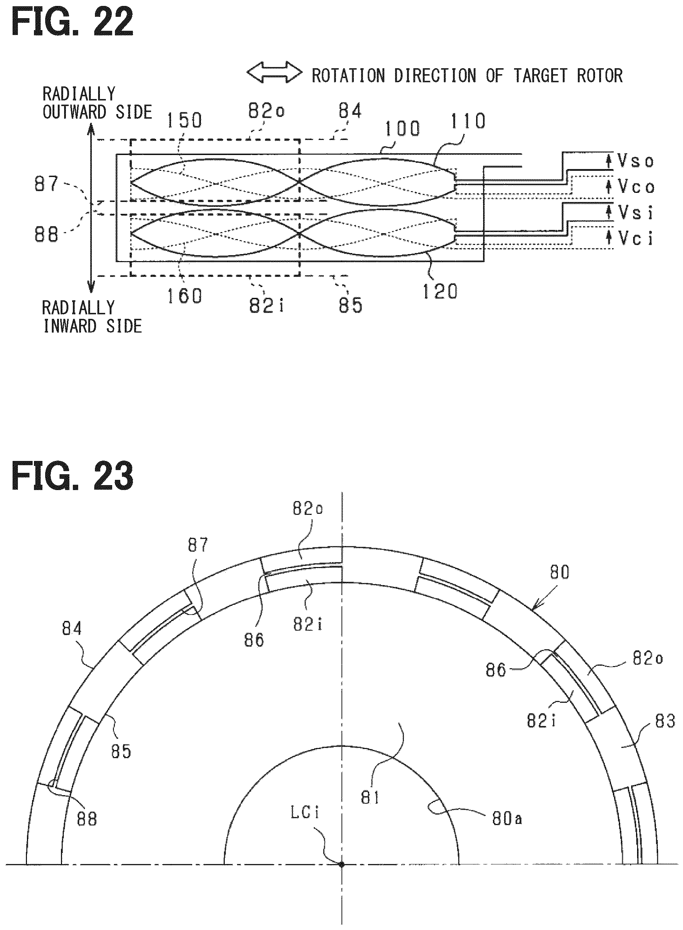

Hereinafter, the third embodiment will be described with reference to the drawings, focusing on the differences from the first embodiment. The detection unit 90 of the present embodiment, as a receiving coil, is provided with a first coil 150 and a second coil 160 in place of the intermediate coil 130, as shown in FIG. 22. In addition, the target rotor 80 has the configuration shown in FIG. 23. FIG. 22 is a diagram in which the excitation coil 100, the outer coil 110, the inner coil 120, the first coil 150, the second coil 160, and the like are shown with the circumferential direction represented in a straight line.

First, the target rotor 80 will be described.

At the radially outer end of the target rotor 80, an outer protrusion 82o that projects in the axial direction of the inner ring 52 from the flat surface 81, and a recess 83 that also projects in the axial direction from the flat surface 81 but is recessed in the axial direction of the inner ring 52 relative to the outer protrusion 82o, are alternately provided in the circumferential direction. An annular "outer detection target portion" is formed by the outer protrusions 82o and the recesses 83.

On the radially inner side of each outer protrusion 82o of the target rotor 80, an inner protrusion 82i is provided via an intermediate recess 86. The outer protrusions 82o and the inner protrusions 82i are arranged in the radial direction. The axial length of the inner protrusion 82i with respect to the recess 83 is the same as the axial length of the outer protrusion 82o with respect to the recess 83. The intermediate recess 86 is an annular portion that is recessed in the axial direction relative to the outer protrusions 82o and the inner protrusions 82i. The inner protrusions 82i and the recesses 83 together form an annular "inner detection target portion."

Next, the first coil 150 and the second coil 160 will be described with reference to FIG. 22.

The first coil 150 and the second coil 160 are planar coils, and are constituted by wiring patterns and vias formed in each layer of the substrate 91. The shapes of the first coil 150 and the second coil 160 are the same as the shape of the intermediate coil 130 in the first embodiment. In the present embodiment, the radial lengths of the first coil 150 and the second coil 160 are smaller than the radial lengths of the outer coil 110 and the inner coil 120.

The first coil 150 is provided on the substrate 91 radially outside the second coil 160. In a plan view of the substrate 91, the outer and inner radial ends of the first coil 150 are located between the radially outer end 84 and a radially inner end 87 of the outer protrusion 82o, and are positioned closer to the radially inner end 87. In a plan view of the substrate 91, the outer and inner radial ends of the second coil 160 are located between the radially outer end 88 and the radially inner end 85 of the inner protrusion 82i, and are positioned closer to the radially outer end 88.

In a plan view of the substrate 91, the outer radial end of the outer coil 110 is located between the radially outer end 84 and the radially inner end 87 of the outer protrusion 82o. In a plan view of the substrate 91, the inner radial end of the outer coil 110 protrudes radially inward beyond the radially inner end 87 of the outer protrusion 82o.

In a plan view of the substrate 91, the outer radial end of the inner coil 120 protrudes radially outward beyond the radially outer end 88 of the inner protrusion 82i. In a plan view of the substrate 91, the inner radial end of the inner coil 120 is located between the radially outer end 88 and the radially inner end 85 of the inner protrusion 82i. In a plan view of the substrate 91, the circumferential end positions of each of the coils 110, 120, 150, and 160 are the same.

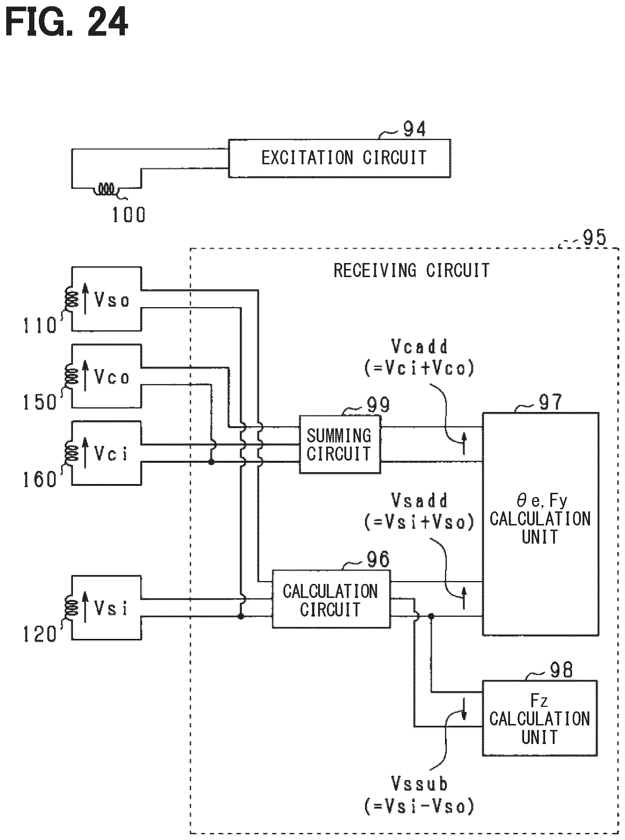

When an excitation voltage is supplied to the excitation coil 100, an excitation current flows through the excitation coil 100, and a voltage having the same or a similar frequency as the excitation voltage is induced in the first coil 150 and the second coil 160. As shown in FIG. 24, the receiving circuit 95 detects the potential difference between both ends of the first coil 150 as a first voltage signal Vco, and detects the potential difference between both ends of the second coil 160 as a second voltage signal Vci.

When an excitation voltage is being supplied to the excitation coil 100, the phase difference between the first voltage signal Vco output from the first coil 150 and the second voltage signal Vci output from the second coil 160 is 0 degrees. In addition, when an excitation voltage is being supplied to the excitation coil 100, the phase difference between the outer voltage signal Vso and the inner voltage signal Vsi with respect to the first voltage signal Vco and the second voltage signal Vci is 90 degrees.

In this embodiment, the amplitude of the first voltage signal Vco is basically equal to the amplitude of the second voltage signal Vci. In addition, the amplitudes of the first and second voltage signals Vco and Vci are smaller than the amplitude of the outer voltage signal Vso. This is because, in a plan view of the substrate 91, the area enclosed by the first coil 150 (or the second coil 160) is smaller than the area enclosed by the outer coil 110.

In this embodiment, the sum voltage Vsadd described in the first embodiment will be referred to as the first sum voltage. The receiving circuit 95 calculates the lateral force Fy based on the second sum voltage Vcadd, which is the value obtained by adding the second voltage signal Vci to the first voltage signal Vco. This is to improve the accuracy of calculating the lateral force Fy.

In a front view of the substrate 91, the first coil 150 is positioned closer to the radially inner end 87 of the outer protrusion 82o, and the second coil 160 is positioned closer to the radially outer end 88 of the inner protrusion 82i. In this case, when the target rotor 80 is displaced in the vertical direction, the first voltage signal Vco output from the first coil 150 and the second voltage signal Vci output from the second coil 160 may temporarily fluctuate. In this case, the accuracy of calculating the lateral force Fy based on the first voltage signal Vco or the second voltage signal Vci may decrease.

Here, the polarity of the temporary fluctuation in the first voltage signal Vco is opposite to the polarity of the temporary fluctuation in the second voltage signal Vci. Therefore, the second sum voltage Vcadd, which is the sum of the first voltage signal Vco and the second voltage signal Vci, becomes an alternating current signal in which temporary fluctuations are suppressed (specifically, for example, canceled).

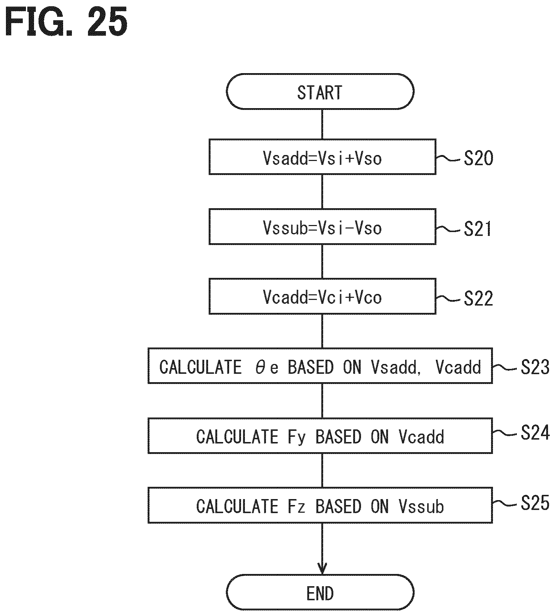

The procedure of the arithmetic processing in the receiving circuit 95 will be explained with reference to FIGS. 24 and 25. This processing is repeatedly executed at a predetermined control cycle, for example.

In step S20, the calculation circuit 96 calculates the first sum voltage Vsadd by adding the outer voltage signal Vso to the inner voltage signal Vsi. It should be noted that, in the present embodiment, the processing of step S20 corresponds to the "first sum voltage calculation unit."

In step S21, a calculation circuit 96 calculates a differential voltage Vssub by subtracting the outer voltage signal Vso from the inner voltage signal Vsi. It should be noted that, in the present embodiment, the processing of step S21 corresponds to the "differential voltage calculation unit."

In step S22, a summing circuit 99 of the receiving circuit 95 calculates a second sum voltage Vcadd by adding the second voltage signal Vci to the first voltage signal Vco. It should be noted that, in the present embodiment, the processing of step S22 corresponds to the "second sum voltage calculation unit."

In step S23, a lateral force angle calculation unit 97 calculates the electrical angle θe based on the calculated first sum voltage Vsadd and second sum voltage Vcadd. The following describes an example of a method for calculating the electrical angle θe.

The lateral force angle calculation unit 97 calculates the envelope of the first sum voltage Vsadd and the envelope of the second sum voltage Vcadd. The lateral force angle calculation unit 97 calculates the electrical angle θe by performing an arctangent operation on the ratio between the envelope of the first sum voltage Vsadd and the envelope of the second sum voltage Vcadd. According to the processing in step S23, it is possible to improve the calculation accuracy of the electrical angle θe. It should be noted that, in the present embodiment, the processing in step S23 corresponds to the "angle calculation unit."

In step S24, the lateral force angle calculation unit 97 calculates the lateral force Fy based on the second sum voltage Vcadd. The following describes an example of a method for calculating the lateral force Fy.

The lateral force angle calculation unit 97 calculates the envelope of the second sum voltage Vcadd. The lateral force angle calculation unit 97 calculates, as the axial displacement signal, the deviation amount of the amplitude of the calculated envelope of the second sum voltage Vcadd with respect to the amplitude of the envelope of the second sum voltage Vcadd in the reference state. The axial displacement signal is updated each time the maximum amplitude value on the positive polarity side and the maximum amplitude value on the negative polarity side of the second sum voltage Vcadd occur. The lateral force angle calculation unit 97 calculates the lateral force Fy based on map information or formula information that associates the axial displacement signal with the lateral force Fy.

In step S25, a vertical load calculation unit 98 calculates the vertical load Fz, based on the calculated differential voltage Vssub, in the same manner as the process of step S14 in FIG. 20.

According to the present embodiment described above, even if the first coil 150 and the second coil 160 are arranged as shown in FIG. 22, the calculation accuracy of the lateral force Fy can be improved.

### (Modified Example of Third Embodiment)

Similar to the second embodiment, in a plan view of the substrate 91, the radially inner portion of the outer coil 110 and the radially outer portion of the inner coil 120 may overlap.

### (Fourth Embodiment)

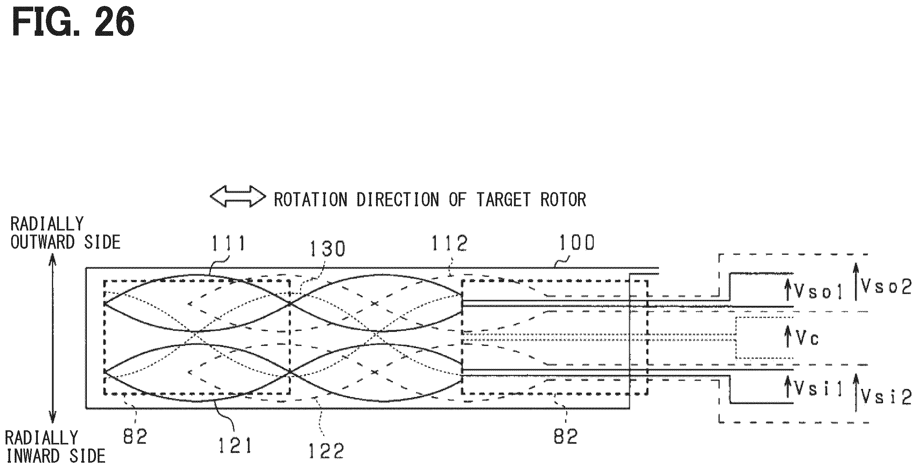

A fourth embodiment will be described below, focusing on the differences from the first embodiment and with reference to the drawings. As shown in FIG. 26, the detection unit 90 of the present embodiment includes, as receiving coils formed on the substrate 91, multiple outer coils and an equal number of inner coils. In the present embodiment, two outer coils are provided. The detection unit 90 includes a first outer coil 111 and a second outer coil 112, as well as a first inner coil 121 and a second inner coil 122. FIG. 26 is a view showing the excitation coil 100, the outer coils 111 and 112, the inner coils 121 and 122, and the protrusion 82, with the circumferential direction illustrated in a straight line.

The shapes of the first outer coil 111 and the second outer coil 112 are the same as the shape of the outer coil 110 in the first embodiment, and the shapes of the first inner coil 121 and the second inner coil 122 are the same as the shape of the inner coil 120 in the first embodiment. The positional relationship among the first outer coil 111, the first inner coil 121, and the intermediate coil 130 is the same as the positional relationship among the outer coil 110, the inner coil 120, and the intermediate coil 130 in the first embodiment.

The second outer coil 112 is provided at the same position as the first outer coil 111 in the radial direction. The second outer coil 112 is provided at a position shifted by a predetermined length K in the circumferential direction relative to the first outer coil 111. In the present embodiment, the predetermined length K is one-fourth of the circumferential length of the first outer coil 111. The predetermined length K corresponds to a length of 90 degrees in electrical angle.

The second inner coil 122 is provided at the same position as the first inner coil 121 in the radial direction. The second inner coil 122 is provided at a position shifted by the predetermined length K in the circumferential direction relative to the first inner coil 121. In other words, the second inner coil 122 is aligned with the second outer coil 112 in the radial direction.

When an excitation voltage is supplied to the excitation coil 100, an excitation current flows through the excitation coil 100, and a voltage having the same or substantially the same frequency as the excitation voltage is induced in the first outer coil 111, the second outer coil 112, the first inner coil 121, and the second inner coil 122. The receiving circuit 95 detects the potential difference between both ends of the first outer coil 111 as a first outer voltage signal Vso1, and detects the potential difference between both ends of the second outer coil 112 as a second outer voltage signal Vso2. In addition, the receiving circuit 95 detects the potential difference between both ends of the first inner coil 121 as a first inner voltage signal Vsi1, and detects the potential difference between both ends of the second inner coil 122 as a second inner voltage signal Vsi2.

When an excitation voltage is being supplied to the excitation coil 100, the phase difference between the first outer voltage signal Vso1 output from the first outer coil 111 and the first inner voltage signal Vsi1 output from the first inner coil 121 is 0 degrees. In addition, when an excitation voltage is being supplied to the excitation coil 100, the phase difference between the second outer voltage signal Vso2 output from the second outer coil 112 and the second inner voltage signal Vsi2 output from the second inner coil 122 is 0 degrees. The phase difference of the second outer voltage signal Vso2 and the second inner voltage signal Vsi2 with respect to the first outer voltage signal Vso1 and the first inner voltage signal Vsi1 is 90 degrees.

As shown in FIG. 26, the reason for arranging multiple outer coils and inner coils side by side in the circumferential direction is to increase the update frequency of the vertical load Fz. When one half of the first portion and one half of the second portion of the receiving coil face the protrusion 82, the envelope of the differential voltage Vssub becomes zero (see time t3 in FIG. 16). In this case, the vertical displacement signal based on the envelope of the differential voltage is updated every 180 electrical degrees.

On the other hand, according to the arrangement shown in FIG. 26, since there is an envelope of the differential voltage based on the first outer voltage signal Vso1 and the first inner voltage signal Vsi1, as well as an envelope of the differential voltage based on the second outer voltage signal Vso2 and the second inner voltage signal Vsi2, the vertical displacement signal is updated every 90 electrical degrees. As a result, the update frequency of the vertical load Fz based on the vertical displacement signal can be increased.

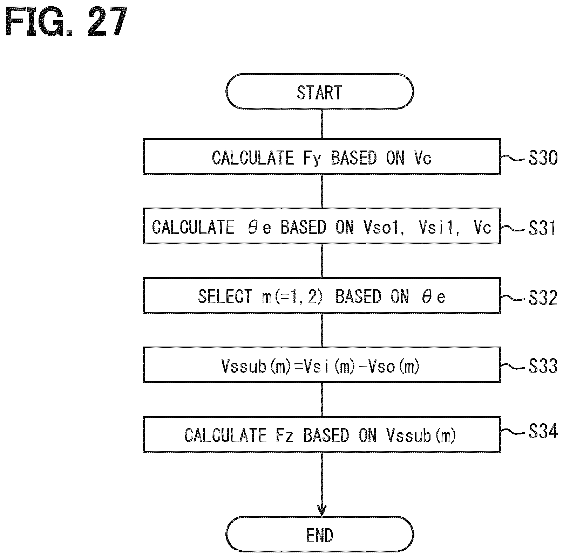

The procedure of the arithmetic processing in the receiving circuit 95 will be explained with reference to FIG. 27. This processing is repeatedly executed, for example, at a predetermined control cycle by the receiving circuit 95.

In step S30, the lateral force Fy is calculated based on the intermediate voltage signal Vc, in the same manner as in step S13 of FIG. 20.

In step S31, the electrical angle θe is calculated based on the first outer voltage signal Vso1, the first inner voltage signal Vsi1, and the intermediate voltage signal Vc. The following describes an example of a method for calculating the electrical angle θe.

By adding the first inner voltage signal Vsi1 to the first outer voltage signal Vso1, a sum voltage is calculated, and the envelope of the calculated sum voltage and the envelope of the intermediate voltage signal Vc are calculated. The electrical angle θe is calculated by performing an arctangent operation on the ratio of the envelope of the sum voltage to the envelope of the intermediate voltage signal.

In step S32, based on the calculated electrical angle θe, it is determined whether to use the first outer voltage signal Vso1 and the first inner voltage signal Vsi1, or the second outer voltage signal Vso2 and the second inner voltage signal Vsi2, for calculating the vertical load Fz. Selection based on the electrical angle θe is performed because the waveform of the envelope of the first differential voltage Vssub1 and the waveform of the envelope of the second differential voltage Vssub2 depend on the electrical angle θe. Based on the electrical angle θe, the outer voltage signal and inner voltage signal corresponding to the envelope of either the first differential voltage Vssub1 or the second differential voltage Vssub2-whichever has the greater absolute value-are selected. The following explanation takes as an example the case where the first outer voltage signal Vso1 and the first inner voltage signal Vsi1 are selected.

In step S33, the first differential voltage Vssub1 is calculated by subtracting the first outer voltage signal Vso1 from the first inner voltage signal Vsi1. In step S34, the vertical load Fz is calculated based on the calculated first differential voltage Vssub1, in the same manner as step S14 in FIG. 20.

If the first outer voltage signal Vso1 and the first inner voltage signal Vsi1 are selected in step S32, then in step S33, the second differential voltage Vssub2 is calculated by subtracting the second outer voltage signal Vso2 from the second inner voltage signal Vsi2. In step S34, the vertical load Fz is calculated based on the calculated second differential voltage Vssub2, in the same manner as step S14 in FIG. 20.

According to the present embodiment described above, the update frequency of the vertical load Fz can be increased.

### (Modified Example of Fourth Embodiment)

The predetermined length K, which is the amount of circumferential displacement between adjacent outer coils in the circumferential direction, is not limited to one-fourth of the circumferential length of the outer coil, and may be, for example, one-sixth or one-twelfth of the length. In the case of one-sixth, the predetermined length K corresponds to a length equivalent to an electrical angle of 60 degrees, and in the case of one-twelfth, the predetermined length K corresponds to a length equivalent to an electrical angle of 30 degrees. For example, when the length is set to one-sixth, the outer coils and the inner coils may be arranged side by side in three rows in the circumferential direction. Also, for example, when the length is set to one-twelfth, the outer coils and the inner coils may be arranged side by side in five rows in the circumferential direction.

### (Fifth Embodiment)

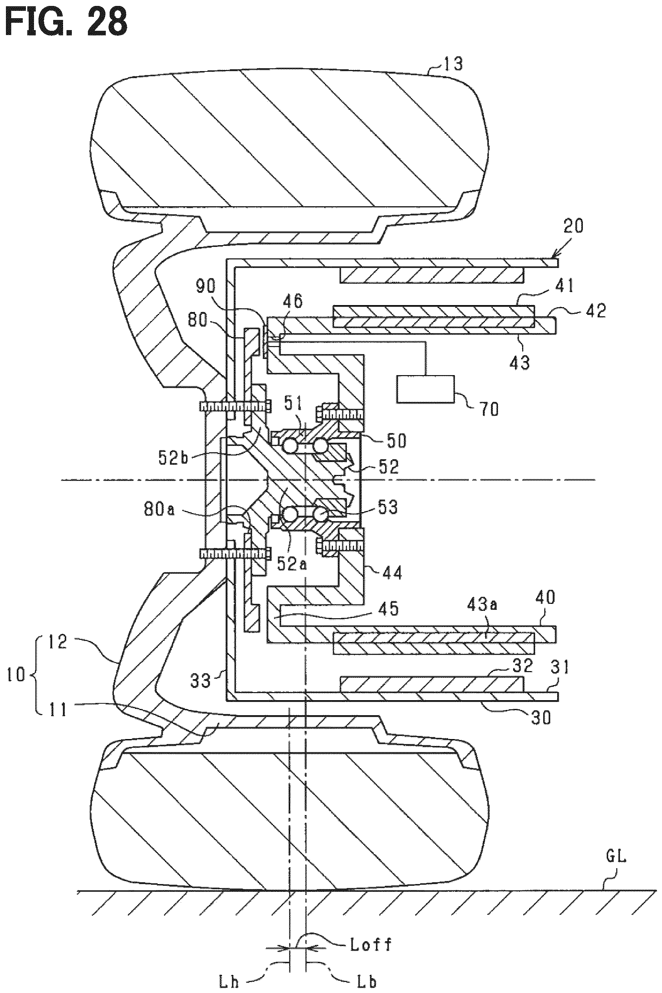

A fifth embodiment will be described below, focusing on the differences from the first embodiment, with reference to the drawings. In the present embodiment, as shown in FIG. 28, the bearing 50 is arranged such that the center position of the bearing 50 in the vehicle width direction is located further inward in the vehicle width direction than the center position of the wheel 10 (which constitutes the wheel) in the vehicle width direction. As a result, the vertical displacement of the target rotor 80 with respect to the vertical load applied to the tire 13 is increased.

Here, the center position of the wheel 10 in the vehicle width direction is, for example, the center position Lh in the vehicle width direction of the rim portion 11 constituting the wheel 10.

The bearing 50 is a double-row bearing in which two rows of rolling elements 53 are arranged in the axial direction. Here, the center position of the bearing 50 in the vehicle width direction is, for example, the center position Lb in the vehicle width direction of the two rows of rolling elements 53 arranged side by side.

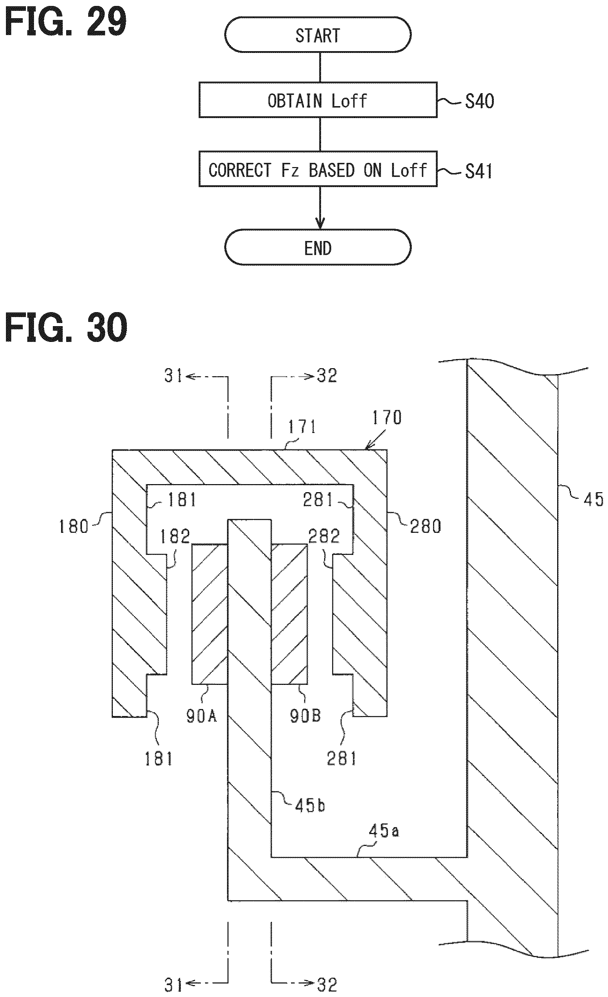

The offset amount Loff between the center position of the wheel 10 and the center position of the bearing 50 in the vehicle width direction affects the calculation accuracy of the vertical load Fz. Therefore, the receiving circuit 95 performs processing to correct the calculated vertical load Fz based on the offset amount Loff. In the following, the correction processing executed by the vertical load calculation unit 98 of the receiving circuit 95 will be described below with reference to FIG. 29.

In step S40, the offset amount Loff is acquired. The offset amount Loff may be obtained, for example, from an inspection device at a vehicle maintenance facility or via a communication network. When an event occurs that changes the offset amount Loff, such as the replacement of the tire 13, the updated offset amount Loff is acquired in step S40.

In step S41, the vertical load Fz calculated in step S14 of FIG. 20 is corrected based on the offset amount Loff acquired in step S40. As the offset amount Loff increases, the vertical displacement of the target rotor 80 when a vertical load is applied becomes larger, and the amplitude of the differential voltage Vssub increases. Therefore, for example, the vertical load Fz may be corrected such that the vertical load Fz increases as the offset amount Loff increases.

According to the embodiment described above, it is possible to improve the calculation accuracy of the vertical load Fz.

### (Sixth Embodiment)

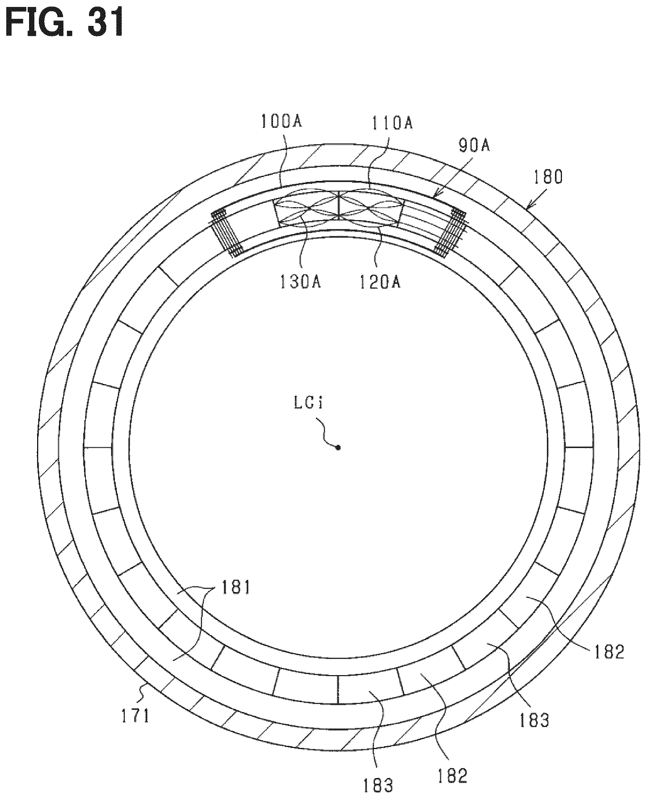

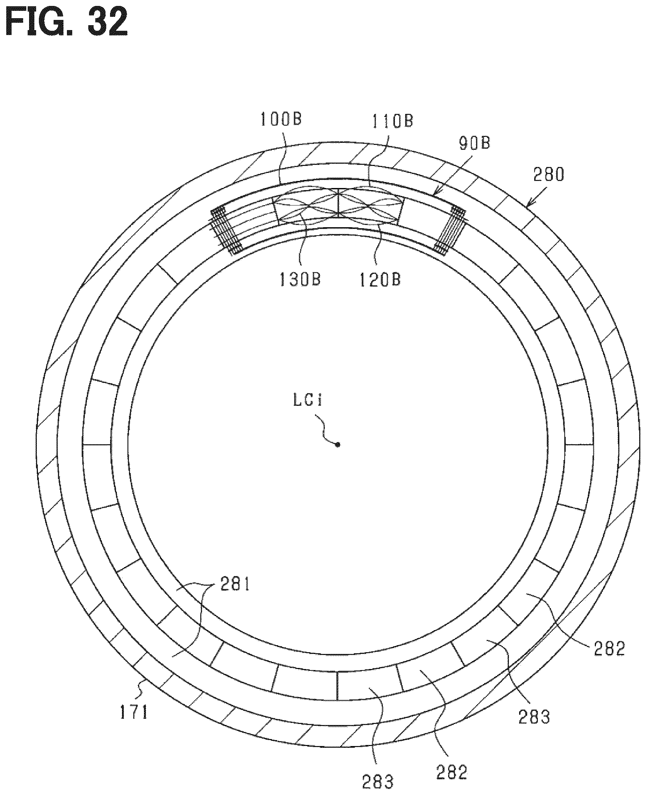

Asixth embodiment will be described below, focusing on the differences from the first embodiment, with reference to the drawings. In this embodiment, as shown in FIGS. 30 to 32, the configuration of the target rotor 170 has been modified. Accordingly, as detection units, a first detection unit 90A and a second detection unit 90B are provided. FIG. 31 is a sectional view taken along line 31-31 of FIG. 30, and FIG. 32 is a sectional view taken along line 32-32 of FIG. 30.

The target rotor 170 is annular in shape and is arranged coaxially with the inner ring 52. The target rotor 170 is fixed to the rotor 30 (for example, the magnet holding portion 31 or the flat plate portion 33) or to the flange portion 52b of the bearing 50. As a result, the target rotor 170, the rotor 30, and the wheel 10 rotate together as a unit.

The target rotor 170 includes a first rotor portion 180, a second rotor portion 280, and an annular connecting portion 171 that connects the first rotor portion 180 and the second rotor portion 280. As shown in FIGS. 30 and 31, the first rotor portion 180 is provided with, in the circumferential direction, a first protrusion 182 that protrudes axially from a first flat surface 181, and a first recess 183 that also protrudes axially from the first flat surface 181 but is recessed in the axial direction relative to the first protrusion 182, with the first protrusion 182 and first recess 183 alternately arranged. The first flat surface 181 is in an annular shape. The first protrusion 182 and first recess 183 together form an annular "first detection target portion." As in the first embodiment, the circumferential length of the first protrusion 182 and the circumferential length of the first recess 183 are equal.

As shown in FIGS. 30 and 32, the second rotor portion 280 is provided, in the circumferential direction, with a second protrusion 282 that protrudes axially from a second flat surface 281, and a second recess 283 that also protrudes axially from the second flat surface 281 but is recessed in the axial direction relative to the second protrusion 282, with the second protrusion 282 and second recess 283 alternately arranged. The second flat surface 281 is in an annular shape. The second protrusion 282 and second recess 283 together form an annular "second detection target portion." As in the first embodiment, the circumferential length of the second protrusion 282 and the circumferential length of the second recess 283 are equal.

The first rotor portion 180 and the second rotor portion 280 have the same shape. Accordingly, the circumferential length of the first protrusion 182 is equal to that of the second protrusion 282, and the circumferential length of the first recess 183 is equal to that of the second recess 283.

The first protrusion 182 of the first rotor portion 180 faces the second protrusion 282 of the second rotor portion 280 in the axial direction. The first recess 183 of the first rotor portion 180 faces the second recess 283 of the second rotor portion 280 in the axial direction.

Next, the first detection unit 90A and the second detection unit 90B will be described.

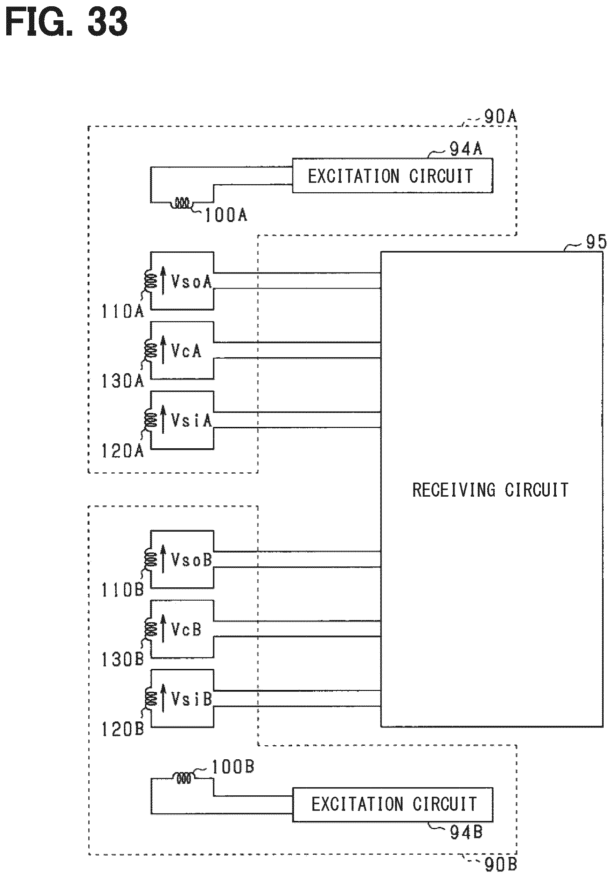

As shown in FIGS. 31 and 33, the first detection unit 90A includes a first excitation coil 100A, a first outer coil 110A, a first inner coil 120A, a first intermediate coil 130A, and a first excitation circuit 94A. The configuration of the first detection unit 90A is the same as that of the detection unit 90 of the first embodiment. Accordingly, a detailed description of the first detection unit 90A will be omitted.

As shown in FIGS. 32 and 33, the second detection unit 90B includes a second excitation coil 100B, a second outer coil 110B, a second inner coil 120B, a second intermediate coil 130B, and a second excitation circuit 94B. The configuration of the second detection unit 90B is the same as that of the first detection unit 90A. Accordingly, a detailed description of the second detection unit 90B will be omitted.

The first detection unit 90A and the second detection unit 90B are fixed to the protrusion 45 of the stator base portion 42. Specifically, the stator base portion 42 includes an extension portion 45a that extends outward in the vehicle width direction from the protrusion 45, and a mounting portion 45b that extends upward from the extension portion 45a. The mounting portion 45b is formed with a first mounting surface and a second mounting surface, which is the reverse side of the first mounting surface. On the first mounting surface, the first detection unit 90A is mounted such that the first excitation coil 100A, the first outer coil 110A, the first inner coil 120A, and the first intermediate coil 130A are positioned to face the first protrusion 182 and the first recess 183 in the axial direction. On the second mounting surface, the second detection unit 90B is mounted such that the second excitation coil 100B, the second outer coil 110B, the second inner coil 120B, and the second intermediate coil 130B are positioned to face the second protrusion 282 and the second recess 283 in the axial direction. The first detection unit 90A is disposed on the reverse side of the second detection unit 90B with the mounting portion 45b interposed therebetween.

As shown in FIG. 33, in the present embodiment, the receiving circuit 95 is provided separately from each detection unit 90A and 90B. The receiving circuit 95 detects the potential difference between both ends of the first outer coil 110A as a first outer voltage signal VsoA, the potential difference between both ends of the first inner coil 120A as a first inner voltage signal VsiA, and the potential difference between both ends of the first intermediate coil 130A as a first intermediate voltage signal VcA. The receiving circuit 95 detects the potential difference between both ends of the second outer coil 110B as a second outer voltage signal VsoB, the potential difference between both ends of the second inner coil 120B as a second inner voltage signal VsiB, and the potential difference between both ends of the second intermediate coil 130B as a second intermediate voltage signal VcB.

The phase difference between the first outer voltage signal VsoA and the second outer voltage signal VsoB is 0 degrees, and the phase difference between the first inner voltage signal VsiA and the second inner voltage signal VsiB is also 0 degrees. In addition, the phase difference between the first intermediate voltage signal VcA and the second intermediate voltage signal VcB is 0 degrees.

When the direction of the lateral force is toward the outer side in the vehicle width direction, the upper end of the first rotor portion 180 moves closer to the mounting portion 45b, while the upper end of the second rotor portion 280 moves away from the mounting portion 45b. In this case, the amplitude of the first intermediate voltage signal VcA increases, while the amplitude of the second intermediate voltage signal VcB decreases.

On the other hand, when the direction of the lateral force is toward the inner side in the vehicle width direction, the upper end of the first rotor portion 180 moves away from the mounting portion 45b, while the upper end of the second rotor portion 280 moves closer to the mounting portion 45b. In this case, the amplitude of the first intermediate voltage signal VcA decreases, while the amplitude of the second intermediate voltage signal VcB increases.

In this way, the direction of change in the amplitude of the first intermediate voltage signal VcA with respect to the axial displacement of the target rotor 170 is opposite to the direction of change in the amplitude of the second intermediate voltage signal VcB with respect to the axial displacement of the target rotor 170. Therefore, by using the differential voltage Vcsub obtained by subtracting the second intermediate voltage signal VcB from the first intermediate voltage signal VcA, it is possible to increase the voltage amplitude and improve the calculation accuracy of the lateral force Fy.

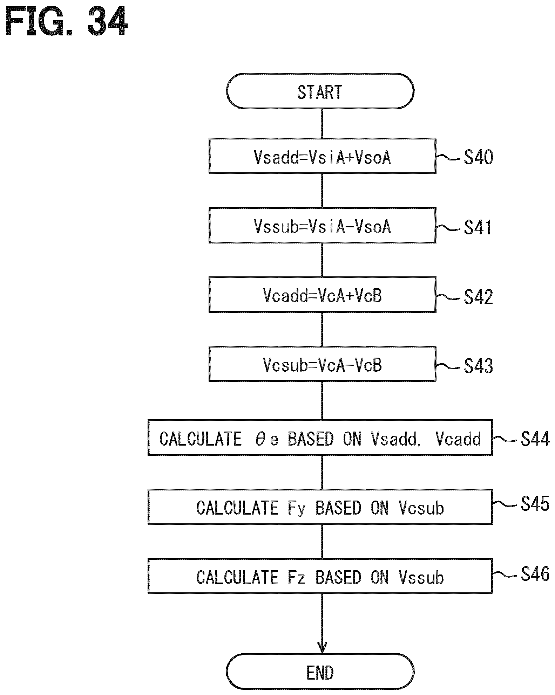

The procedure of the arithmetic processing in the receiving circuit 95 will be explained with reference to FIG. 34. This processing is repeatedly executed, for example, at a predetermined control cycle.

In step S40, the first sum voltage Vsadd is calculated by adding the first outer voltage signal VsoA to the first inner voltage signal VsiA.

In step S41, the first differential voltage Vssub is calculated by subtracting the first outer voltage signal VsoA from the first inner voltage signal VsiA.

In step S42, the second sum voltage Vcadd is calculated by adding the second intermediate voltage signal VcB to the first intermediate voltage signal VcA.

In step S43, the second differential voltage Vcsub is calculated by subtracting the second intermediate voltage signal VcB from the first intermediate voltage signal VcA. In this embodiment, the processing in step S43 corresponds to the "differential voltage calculation unit."

In step S44, the electrical angle θe is calculated based on the calculated first sum voltage Vsadd and the calculated second sum voltage Vcadd. The following explains an example of a method for calculating the electrical angle θe.

The envelope of the first sum voltage Vsadd and the envelope of the second sum voltage Vcadd are calculated. The electrical angle θe is calculated by performing an arctangent operation on the ratio between the envelope of the first sum voltage Vsadd and the envelope of the second sum voltage Vcadd.

In step S45, the lateral force Fy is calculated based on the second differential voltage Vcsub. The following explains an example of a method for calculating the lateral force Fy.

The envelope of the second differential voltage Vcsub is calculated. The offset amount of the amplitude of the calculated envelope of the second differential voltage Vcsub with respect to the amplitude of the envelope of the second differential voltage Vcsub in the reference state is calculated as an axial displacement signal. The axial displacement signal is updated each time the maximum amplitude value on the positive polarity side or the maximum amplitude value on the negative polarity side of the second differential voltage Vcsub appears. The lateral force Fy is calculated based on map information or formula information in which the axial displacement signal and the lateral force Fy are correlated. In this embodiment, the processing of step S45 corresponds to the "force calculation unit."

In step S46, the vertical load Fz is calculated based on the calculated first differential voltage Vssub.

According to the present embodiment described above, since the second differential voltage Vcsub, whose amplitude has been increased, is used to calculate the lateral force Fy, the calculation accuracy of the lateral force Fy can be improved.

### (Other Embodiments)

It should be noted that each of the above embodiments may be modified and implemented as follows.

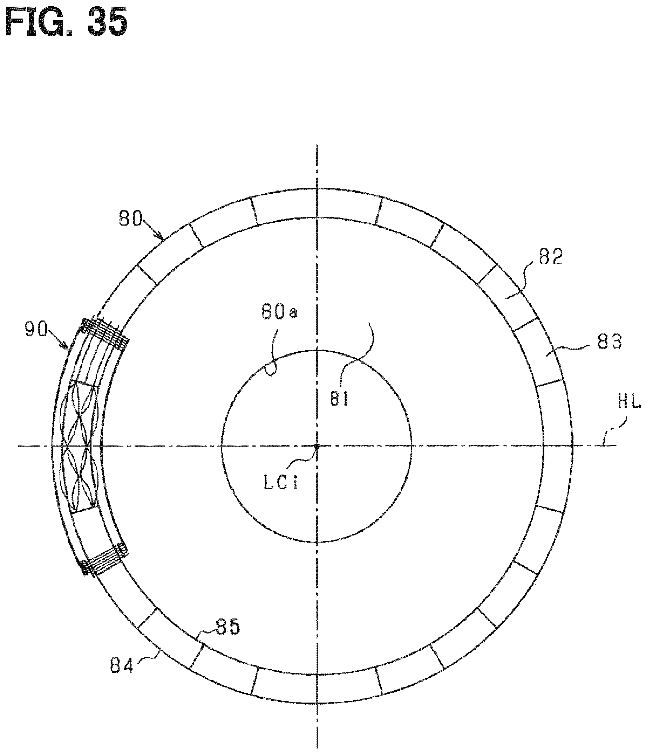

As shown in FIG. 35, the detection unit 90 may be provided in the vicinity of either the front end or the rear end, in the vehicle longitudinal direction, of the target rotor 80. In FIG. 35, HL indicates a horizontal axis passing through the center axis LCi of the inner ring 52.

According to the arrangement of the detection unit 90 shown in FIG. 35, the receiving circuit 95 can calculate the longitudinal load Fx, which is the force acting between the wheel and the ground surface GL in the vehicle longitudinal direction, instead of the vertical load Fz. The direction in which the lateral force Fy acts is perpendicular to the direction in which the longitudinal load Fx acts. The longitudinal load Fx is used in the control device for vehicle running control.

An example will be described in which the detection unit 90 is provided near the front end of the target rotor 80 among both longitudinal ends of the vehicle. The longitudinal load Fx is defined as positive when the vehicle is accelerating, and negative when the vehicle is decelerating. When the longitudinal load Fx is positive, the target rotor 80 is displaced toward the vehicle traveling direction. This state corresponds to a condition in the first embodiment in which the upward vertical load acting on the wheel increases. On the other hand, when the longitudinal load Fx is negative, the target rotor 80 is displaced in the direction opposite to the vehicle traveling direction. This state corresponds to a condition in the first embodiment in which the downward vertical load acting on the wheel increases.

The target rotor may be fixed to the rotor (for example, the flat plate portion 33).

At least a part of the motor may be disposed outside the inner space of the wheel 10.

The in-wheel motor 20 may not be provided with the target rotor 80. In this case, for example, it is sufficient if the protrusions 82 and recesses 83 are alternately formed in the circumferential direction on the portion of the flat plate portion 33 of the in-wheel motor 20 that faces the coil unit 92 in the axial direction. In this case, the flat plate portion 33 corresponds to the "detection target portion."

The protrusion 82 may not be formed on the target rotor 80, and the recess 83 may be formed in an annular shape over the entire circumferential range of the target rotor 80. Even in this case, the lateral force Fy and the vertical load Fz can be calculated.

The bearing is not limited to one in which the outer ring 51 is fixed to the stator base portion 42 and the inner ring 52 is fixed to the wheel 10; it may also be one in which the outer ring is fixed to the wheel 10 and the inner ring is fixed to the stator base portion 42. In this case, the inner ring corresponds to the "first bearing member," and the outer ring corresponds to the "second bearing member."

The motor is not limited to an outer rotor type, and may also be an inner rotor type.

At least a part of the detection unit 90 may be provided in a state of contact with the target rotor 80.

The detection device is not limited to application to vehicle wheels; for example, it can be applied to any machine equipped with a rotating body, such as an aircraft propeller, a marine screw, a rotating member of an internal combustion engine (e.g., a crankshaft), or a power generation turbine. Furthermore, the rotating body is not limited to those used with their axial direction in the horizontal orientation, but may also be used with the axial direction oriented in a direction other than horizontal (for example, vertical).

The control unit and its method described in the present disclosure may be implemented by a dedicated computer provided by configuring a processor and memory programmed to execute one or more functions embodied as a computer program. Alternatively, the control unit and its method described in the present disclosure may be implemented by a dedicated computer provided by configuring a processor with one or more dedicated hardware logic circuits. Alternatively, the control unit and its method described in the present disclosure may be implemented by one or more dedicated computers configured by a combination of a processor and memory programmed to execute one or more functions, together with a processor constituted by one or more hardware logic circuits. Furthermore, the computer program may be stored as instructions executable by a computer on a non-transitory, tangible computer-readable recording medium.

The characteristic configurations extracted from each of the embodiments described above are as follow.

### [Configuration 1]

A detector is adapted to a machine including a rotating body (10). The detector includes a bearing (50), a detection target (82, 83, 182, 183, 282, 283), a receiving coil (110, 120, 130, 150, 160, 111, 112, 121, 122, 110A, 120A, 130A, 110B, 120B, 130B) and an excitation coil (100, 100A, 100B). The bearing rotatably supports the rotating body relative to a base portion (42) of the machine. The detection target extends in a circumferential direction of the bearing and has an annular shape concentric with the bearing. The receiving coil has a planar shape and extends in a radial direction of the bearing. The receiving coil is fixed to the base portion and disposed at a position facing the detection target in an axial direction of the bearing. The excitation coil receives an AC excitation voltage. The detection target rotates with the rotating body. The receiving coil includes: an outer coil (110, 111, 112, 110A, 110B) that induces a voltage in response to the excitation coil receiving the AC excitation voltage; and an inner coil (120, 121, 122, 120A, 120B) that induces a voltage having a same phase as a phase of the voltage induced in the outer coil in response to the excitation coil receiving the AC excitation voltage. The outer coil is positioned radially outward relative to the inner coil. In a plan view of the outer coil and the inner coil, one radial end of the outer coil and one radial end of the inner coil extend beyond corresponding radial ends of the detection target. The outer coil and the inner coil output an AC voltage signal having an amplitude varying with a displacement of the detection target portion in a direction perpendicular to the axial direction, in response to the excitation coil receiving the AC excitation voltage.

### [Configuration 2]

In the detector according to Configuration 1, in the plan view of the outer coil (110-112) and the inner coil (120-122), an outer radial end of the outer coil extends beyond an outer radial end (84) of the detection target. Additionally, in the plan view of the outer coil and the inner coil, an inner radial end of the outer coil and an outer radial end of the inner coil are located between the outer radial end of the detection target and an inner radial end (85) of the detection target. Moreover, in the plan view of the outer coil and the inner coil, an inner radial end of the inner coil extends beyond the inner radial end of the detection target.

### [Configuration 3]

The detector according to Configuration 2 includes a differential voltage calculation unit (96) and a force calculation unit (98). The differential voltage calculation unit calculates a differential voltage (Vssub) as a difference between the AC voltage signal output from the outer coil (110) and the AC voltage signal output from the inner coil (120). The force calculation unit (98) calculates a force (Fz) acting on the rotating body in a direction perpendicular to the axial direction, based on the differential voltage calculated by the differential voltage calculation unit.

### [Configuration 4]

In the detector according to any one of Configurations 1 to 3, the detection target includes: recesses (83) that are recessed in the axial direction; and protrusions (82) that protrude in the axial direction relative to the recesses. The recesses and the protrusions are alternately arranged in the circumferential direction. The receiving coil includes an intermediate coil (130) configured to induce a voltage with a phase different from respective phases of voltages induced in the outer coil and the inner coil, in response to the excitation coil receiving the AC excitation voltage. In a plan view of the outer coil, the inner coil, and the intermediate coil, an outer radial end and an inner radial end of the intermediate coil are located between an outer radial end and an inner radial end of the detection target. The intermediate coil outputs an AC voltage signal having an amplitude varying with a displacement of the detection target in the axial direction. The detector further includes a sum voltage calculation unit (96) and an angle calculation unit (97). The sum voltage calculation unit calculates a sum voltage (Vsadd) as a sum of the AC voltage signal output from the outer coil and the AC voltage signal output from the inner coil. The angle calculation unit calculates a rotation angle of the rotating body, based on the sum voltage calculated by the sum voltage calculation unit and the AC voltage signal output from the intermediate coil.

### [Configuration 5]

In the detector according to Configuration 2, the outer coil (111, 112) is one of outer coils that are aligned in the circumferential direction, and the inner coil (121, 122) is one of inner coils that are correspondingly disposed at positions aligned with respective ones of the outer coils in the radial direction. The outer coils that are adjacent to each other in the circumferential direction are arranged such that respective portions of the outer coils overlap each other in a plan view of the outer coils. The inner coils that are adjacent to each other in the circumferential direction are arranged such that respective portions of the inner coils overlap each other in a plan view of the inner coils.

### [Configuration 6]

The detector according to Configuration 5 further includes a differential voltage calculation unit (95) and a force calculation unit (95). The differential voltage calculation unit selects one pair from among respective pairs of the outer coil and the inner coil aligned in the radial direction, and calculates a differential voltage as a difference between an output voltage signal of the outer coil and an output voltage signal of the inner coil in the selected one pair. The force calculation unit calculates a force (Fz) acting on the rotating body in a direction perpendicular to the axial direction, based on the differential voltage calculated by the differential voltage calculation unit.

### [Configuration 7]

In the detector according to Configuration 1, the detection target includes: an outer detection target portion (82o, 83); and an inner detection target portion (82i, 83) that is arranged on an inner side of the outer detection target portion in the radial direction. Each of the outer detection target portion and the inner detection target portion includes: recesses (83) that are recessed in the axial direction, and protrusions (82o, 82i) that protrude in the axial direction relative to the recesses. The recesses and the protrusions are alternately disposed in the circumferential direction. The detection target further includes an intermediate recess that has an annular shape and is recessed in the axial direction relative to the protrusion. The intermediate recess is located between the outer detection target portion and the inner detection target portion in the radial direction. The protrusions of the outer detection target portion and the protrusion of the inner detection target portion are aligned in the radial direction. In a plan view of the outer coil and the inner coil, an outer radial end of the outer coil is located between an outer radial end (84) and an inner radial end (87) of the outer detection target portion. In the plan view of the outer coil and the inner coil, the inner radial end of the outer coil extends beyond the inner radial end of the outer detection target portion. In the plan view of the outer coil and the inner coil, an outer radial end of the inner detection target portion extends beyond an outer radial end (88) of the inner detection target portion. In the plan view of the outer coil and the inner coil, an inner radial end of the inner coil is located between an inner radial end (85) and the outer radial end of the inner detection target portion.

### [Configuration 8]

The detector according to Configuration 7 includes: a differential voltage calculation unit (96) that calculates a differential voltage (Vssub) as difference between the AC voltage signal output from the outer coil and the AC voltage signal output from the inner coil; and a force calculation unit (98) that calculates a force (Fz) acting on the rotating body in a direction perpendicular to the axial direction based on the differential voltage calculated by the differential voltage calculation unit.

### [Configuration 9]

In the detector according to Configuration 7 or 8, the receiving coil includes: a first coil (150) that induces a voltage having a phase different from respective voltages induced in the outer coil and the inner coil, upon application of the excitation voltage to the excitation coil; and a second coil (160) that induces a voltage having a same phase as a phase of the voltage induced in the first coil, in response to the excitation coil receiving the AC excitation voltage. The first coil is disposed on an outer side of the second coil in the radial direction. An outer radial end and an inner radial end of the first coil are located between the outer radial end and the inner radial end of the outer detection target portion and are positioned closer to the inner radial end of the outer detection target portion, in a plan view of the outer coil, the inner coil, the first coil, and the second coil. An outer radial end and an inner radial end of the second coil are located between the outer radial end and the inner radial end of the inner detection target portion and are positioned closer to the outer radial end of the inner detection target portion, in a plan view of the outer coil, the inner coil, the first coil, and the second coil. The first coil outputs an AC voltage signal having an amplitude varying with a displacement of the outer detection target portion in the axial direction. The second coil outputs an AC voltage signal having an amplitude varying with a displacement of the inner detection target portion in the axial direction. The detector further includes: a first sum voltage calculation unit (96) that calculates a first sum voltage (Vsadd) as sum of the AC voltage signal output from the outer coil and the AC voltage signal output from the inner coil; a second sum voltage calculation unit (99) that calculates a second sum voltage (Vcadd) as sum of the AC voltage signal output from the first coil and the AC voltage signal output from the second coil; and an angle calculation unit (97) that calculates a rotation angle of the rotating body based on the first sum voltage calculated by the first sum voltage calculation unit and the second sum voltage calculated by the second sum voltage calculation unit.

### [Configuration 10]

In the detector according to any one of Configurations 1 to 9, an inner portion of the outer coil and an outer portion of the inner coil overlap each other in the radial direction, in a front view of the outer coil and the inner coil.

### [Configuration 11]

In the detector according to Configuration 4 or 9, the machine includes a motor (20) as a rotational driving source for the rotating body. The motor includes a rotor (30) having a magnet unit (32) with magnetic poles whose polarities are alternately arranged in the circumferential direction. The angle calculation unit calculates a rotation angle of the rotor as the rotation angle of the rotating body.

### [Configuration 12]

In the detector according to any one of Configurations 1 to 11, the receiving coil includes: a first portion (110P, 120P, 130P) that is configured to generate a voltage having a first polarity between both ends of the receiving coil in response to the excitation coil receiving the AC excitation voltage; and a second portion (110M, 120M, 130M) that is configured to generate a voltage having a second polarity between both ends of the receiving coil in response to the excitation coil receiving the AC excitation voltage. The second polarity is opposite to the first polarity. The receiving coil has either: a structure in which, in a plan view of the receiving coil, the first portion (110P, 120P) is located on one side with respect to a center of the receiving coil in the circumferential direction, the second portion (110M, 120M) is located on another side with respect to the center of the receiving coil in the circumferential direction, and the first portion and the second portion are aligned in the circumferential direction; or a structure in which, in the plan view of the receiving coil, the first portion (130P) and the second portion (130M) located on one side and the first portion and the second portion located on another side are arranged symmetrically with respect to the center.

### [Configuration 13]

In the detector according to any one of Configurations 1 to 12, the machine is a vehicle having a wheel assembly as the rotating body.

### [Configuration 14]

In the detector according to Configuration 13, the bearing is arranged such that a center position (Lb) of the bearing in a width direction of the vehicle is located further inward in the width direction than a center position (Lh) of a wheel in the width direction; and the wheel is included in the wheel assembly.

### [Configuration 15]

The detector according to Configuration 14 depending on any one of Configurations 3, 6, and 8 further includes a correction unit that obtains an offset amount (Loff) between a center position of the wheel in the width direction of the vehicle and a center position of the bearing in the width direction of the vehicle; and corrects a force calculated by the force calculation unit based on the obtained offset amount.

### [Configuration 16]

In the detector according to Configuration 1, the detection target includes: a first detection target portion; and a second detection target portion at a position facing the first detection target portion in the axial direction. Recesses (183, 283) and protrusions (182, 282) are alternately disposed in the circumferential direction in the first detection target portion and the second detection target portion. The recess is recessed in the axial direction, and the protrusion protrudes in the axial direction relative to the recess. The recesses and the protrusions in the first detection target portion are disposed to face the recesses and the protrusions in the second detection target portion. The receiving coil includes: a first intermediate coil (130A) at a position facing the first detection target portion; and a second intermediate coil (130B) at a position facing the second detection target portion. The first intermediate coil and the second intermediate coil are configured such that the first intermediate coil induces a voltage having a same phase as a voltage induced in the second intermediate coil, in response to the excitation coil receiving the AC excitation voltage. The detector further includes: a differential voltage calculation unit (95) that calculates a differential voltage (Vcsub) as a difference between an output voltage signal of the first intermediate coil and an output voltage signal of the second intermediate coil; and a force calculation unit (95) that calculates a force (Fy) acting on the rotating body in the axial direction, based on the differential voltage calculated by the differential voltage calculation unit.

### [Configuration A: Program Claim Corresponding to Configuration 3]

A program, which is adapted to the detector according to Configuration 3, causes a computer to: calculate a differential voltage (Vssub) as a difference between the AC voltage signal output from the outer coil (110) and the AC voltage signal output from the inner coil (120); and calculate a force (Fz) acting on the rotating body in a direction perpendicular to the axial direction, based on the calculated differential voltage.

### [Configuration B: Program Claim Corresponding to Configuration 4]

In the detector according to Configuration 3, the detection target includes: recesses (83) that are recessed in the axial direction; and protrusions (82) that protrude in the axial direction relative to the recess. The recesses and the protrusions are alternately arranged in the circumferential direction. The receiving coil includes an intermediate coil (130) configured to induce a voltage with a phase different from respective phases of voltages induced in the outer coil and the inner coil, in response to the excitation coil receiving the AC excitation voltage. In a plan view of the outer coil, the inner coil, and the intermediate coil, an outer radial end and an inner radial end of the intermediate coil are located between an outer radial end and an inner radial end of the detection target. The intermediate coil is configured to output an AC voltage signal having an amplitude varying with a displacement of the detection target in the axial direction. A program, which is adapted to the detector, causes a computer to: calculate a sum voltage (Vsadd) as a sum of the AC voltage signal output form the outer coil and the AC voltage signal output from the inner coil; and calculate a rotation angle of the rotating body, based on the calculated sum voltage and the AC voltage signal output from the intermediate coil.

### [Configuration C: Program Claim Corresponding to Configuration 6]

A program, which is adapted to the detector according to Configuration 5, causes a computer to: select one pair from among respective pairs of the outer coil and the inner coil aligned in the radial direction; calculate a differential voltage as a difference between an output voltage signal of the outer coil and an output voltage signal of the inner coil in the selected one pair; and calculate a force (Fz) acting on the rotating body in a direction perpendicular to the axial direction, based on the differential voltage calculated by the differential voltage calculation unit.

### [Configuration D: Program Claim Corresponding to Configuration 8]

A program, which is adapted to the detector according to Configuration 8, causes a computer to: calculate a differential voltage (Vssub) as difference between the AC voltage signal output from the outer coil and the AC voltage signal output from the inner coil; and that calculate a force (Fz) acting on the rotating body in a direction perpendicular to the axial direction based on the calculated differential voltage.

### [Configuration E: Program Claim Corresponding to Configuration 9]

In the detector according to Configuration 8, the receiving coil includes: a first coil (150) that induces a voltage having a phase different from respective voltages induced in the outer coil and the inner coil, upon application of the excitation voltage to the excitation coil; and a second coil (160) that induces a voltage having a same phase as a phase of the voltage induced in the first coil, in response to the excitation coil receiving the AC excitation voltage. The first coil is disposed on an outer side of the second coil in the radial direction. An outer radial end and an inner radial end of the first coil are located between the outer radial end and the inner radial end of the outer detection target portion and are positioned closer to the inner radial end of the outer detection target portion, in a plan view of the outer coil, the inner coil, the first coil, and the second coil. An outer radial end and an inner radial end of the second coil are located between the outer radial end and the inner radial end of the inner detection target portion and are positioned closer to the outer radial end of the inner detection target portion, in a plan view of the outer coil, the inner coil, the first coil, and the second coil. The first coil outputs an AC voltage signal having an amplitude varying with a displacement of the outer detection target portion in the axial direction. The second coil outputs an AC voltage signal having an amplitude varying with a displacement of the inner detection target portion in the axial direction. A program, which is adapted to the detector, causes a computer to: calculate a first sum voltage (Vsadd) as sum of the AC voltage signal output from the outer coil and the AC voltage signal output from the inner coil; calculate a second sum voltage (Vcadd) as sum of the AC voltage signal output from the first coil and the AC voltage signal output from the second coil; and calculate a rotation angle of the rotating body based on the calculated first sum voltage and the calculated second sum voltage.

### [Configuration F: Program Claim Corresponding to Configuration 15]

A program, which is adapted to the detector according to Configuration 14, causes a computer to: obtain an offset amount (Loff) between a center position of the wheel in the width direction of the vehicle and a center position of the bearing in the width direction of the vehicle; and correct a force calculated by the force calculation unit based on the obtained offset amount.

### [Configuration G: Program Claim Corresponding to Configuration 16]

In the detector according to Configuration 1, the detection target includes: a first detection target portion; and a second detection target portion at a position facing the first detection target portion in the axial direction. Recesses (183, 283) and protrusions (182, 282) are alternately disposed in the circumferential direction in the first detection target portion and the second detection target portion. The recess are recessed in the axial direction, and the protrusions protrude in the axial direction relative to the recess. The recesses and the protrusions in the first detection target portion are disposed to face the recesses and the protrusions in the second detection target portion. The receiving coil includes: a first intermediate coil (130A) at a position facing the first detection target portion; and a second intermediate coil (130B) at a position facing the second detection target portion. The first intermediate coil and the second intermediate coil are configured such that the first intermediate coil induces a voltage having a same phase as a voltage induced in the second intermediate coil, in response to the excitation coil receiving the AC excitation voltage. A program, which is adapted to the detector, causes a computer to: calculate a differential voltage (Vcsub) as a difference between an output voltage signal of the first intermediate coil and an output voltage signal of the second intermediate coil; calculate a force (Fy) acting on the rotating body in the axial direction, based on the calculated differential voltage.

### [Configuration H]

A system includes a machine and a detector. The machine includes a rotating body (10). The detector includes a bearing (50), a first detection target (182, 183), a second detection target (282, 283), a receiving coil (130A, 130B), and an excitation coil. The bearing rotatably supports the rotating body with respect to a base portion (42) of the machine. The first detection target extends in a circumferential direction of the bearing and has an annular shape concentric with the bearing. The second detection target extends in the circumferential direction and has an annular shape concentric with the bearing. The receiving coil has a planar shape and extends in a radial direction of the bearing. The receiving coil is fixed to the base portion and arranged at a position facing the detection target in an axial direction of the bearing. The excitation coil receives an AC excitation voltage. The first detection target and the second detection target rotate with the rotating body. The second detection target is arranged at a position facing the first detection target in the axial direction. Recesses (183, 283) and protrusions (182, 282) are alternately arranged in the circumferential direction in the first detection target and the second detection target. The recesses are recessed in the axial direction, and the protrusions protrude in the axial direction relative to the recesses. The recesses and the protrusions in the first detection target are arranged to face the recesses and the protrusions in the second detection target. The receiving coil includes: a first intermediate coil (130A) at a position facing the first detection target; and a second intermediate coil (130B) at a position facing the second detection target. The first intermediate coil and the second intermediate coil are provided such that the first intermediate coil induces a voltage having a same phase as a voltage induced in the second intermediate coil, in response to the excitation coil receiving the AC excitation voltage. A program, which is adapted to the system, causes a computer to: calculate a differential voltage (Vcsub) as a difference between an output voltage signal of the first intermediate coil and an output voltage signal of the second intermediate coil; and calculate a force (Fy) acting on the rotating body in the axial direction, based on the calculated differential voltage.

The present disclosure has been described in accordance with the embodiments; however, it is understood that the present disclosure is not limited to these embodiments or structures. The present disclosure also encompasses various modifications and alterations within the scope of equivalence. In addition, various combinations and forms, as well as other combinations and forms that include only one element, more than one, or fewer than those, also fall within the scope and spirit of the present disclosure.

## Claims

1. A detector adapted to a machine including a rotating body (10), the detector comprising:
a bearing (50) rotatably supporting the rotating body relative to a base portion (42) of the machine;
a detection target (82, 83, 182, 183, 282, 283) extending in a circumferential direction of the bearing and having an annular shape concentric with the bearing;
a receiving coil (110, 120, 130, 150, 160, 111, 112, 121, 122, 110A, 120A, 130A, 110B, 120B, 130B) having a planar shape and extending in a radial direction of the bearing, the receiving coil fixed to the base portion and arranged at a position facing the detection target in an axial direction of the bearing; and
an excitation coil (100, 100A, 100B) configured to receive an AC excitation voltage, wherein
the detection target is configured to rotate with the rotating body,
the receiving coil includes:
an outer coil (110, 111, 112, 110A, 110B) configured to induce a voltage in response to the excitation coil receiving the AC excitation voltage; and
an inner coil (120, 121, 122, 120A, 120B) configured to induce a voltage having a same phase as a phase of the voltage induced in the outer coil, in response to the excitation coil receiving the AC excitation voltage,
the outer coil is positioned radially outward relative to the inner coil,
in a plan view of the outer coil and the inner coil, one radial end of the outer coil and one radial end of the inner coil extend beyond corresponding radial ends of the detection target, and
the outer coil and the inner coil are configured to output an AC voltage signal having an amplitude varying with a displacement of the detection target in a direction perpendicular to the axial direction, in response to the excitation coil receiving the AC excitation voltage.

2. The detector according to Claim 1, wherein
in the plan view of the outer coil (110-112) and the inner coil (120-122), an outer radial end of the outer coil extends beyond an outer radial end (84) of the detection target,
in the plan view of the outer coil and the inner coil, an inner radial end of the outer coil and an outer radial end of the inner coil are located between the outer radial end of the detection target and an inner radial end (85) of the detection target, and
in the plan view of the outer coil and the inner coil, an inner radial end of the inner coil extends beyond the inner radial end of the detection target.

3. The detector according to Claim 2, further comprising:
a differential voltage calculation unit (96) configured to calculate a differential voltage (Vssub) as a difference between the AC voltage signal output from the outer coil (110) and the AC voltage signal output from the inner coil (120); and
a force calculation unit (98) configured to calculate a force (Fz) acting on the rotating body in a direction perpendicular to the axial direction, based on the differential voltage calculated by the differential voltage calculation unit.

4. The detector according to any one of Claims 1 to 3, wherein
the detection target includes:
recesses (83) that are recessed in the axial direction; and
protrusions (82) that protrude in the axial direction relative to the recesses,
the recesses and the protrusions are alternately arranged in the circumferential direction,
the receiving coil includes an intermediate coil (130) configured to induce a voltage with a phase different from respective phases of voltages induced in the outer coil and the inner coil, in response to the excitation coil receiving the AC excitation voltage,
in a plan view of the outer coil, the inner coil, and the intermediate coil, an outer radial end and an inner radial end of the intermediate coil are located between an outer radial end and an inner radial end of the detection target,
the intermediate coil is configured to output an AC voltage signal having an amplitude varying with a displacement of the detection target in the axial direction, and
the detector further comprises:
a sum voltage calculation unit (96) configured to calculate a sum voltage (Vsadd) as a sum of the AC voltage signal output from the outer coil and the AC voltage signal output from the inner coil; and
an angle calculation unit (97) configured to calculate a rotation angle of the rotating body, based on
the sum voltage calculated by the sum voltage calculation unit, and
the AC voltage signal output from the intermediate coil.

5. The detector according to Claim 2, wherein
the outer coil (111, 112) is one of outer coils that are aligned in the circumferential direction,
the inner coil (121, 122) is one of inner coils that are correspondingly arranged at positions aligned with respective ones of the outer coils in the radial direction,
the outer coils that are adjacent to each other in the circumferential direction are arranged such that respective portions of the outer coils overlap each other in a plan view of the outer coils, and
the inner coils that are adjacent to each other in the circumferential direction are arranged such that respective portions of the inner coils overlap each other in a plan view of the inner coils.

6. The detector according to Claim 5, further comprising:
a differential voltage calculation unit (95) configured to
select one pair from among respective pairs of the outer coil and the inner coil aligned in the radial direction, and
calculate a differential voltage as a difference between an output voltage signal of the outer coil and an output voltage signal of the inner coil in the selected one pair; and
a force calculation unit (95) configured to calculate a force (Fz) acting on the rotating body in a direction perpendicular to the axial direction, based on the differential voltage calculated by the differential voltage calculation unit.

7. The detector according to Claim 1, wherein
the detection target includes:
an outer detection target portion (82o, 83); and
an inner detection target portion (82i, 83) arranged on an inner side of the outer detection target portion in the radial direction,
each of the outer detection target portion and the inner detection target portion includes
recesses (83) that are recessed in the axial direction, and
protrusions (82o, 82i) that protrude in the axial direction relative to the recesses,
the recesses and the protrusions are alternately arranged in the circumferential direction,
the detection target further includes an intermediate recess that has an annular shape and is recessed in the axial direction relative to the protrusions,
the intermediate recess is located between the outer detection target portion and the inner detection target portion in the radial direction,
the protrusions of the outer detection target portion and the protrusions of the inner detection target portion are aligned in the radial direction,
in a plan view of the outer coil and the inner coil, an outer radial end of the outer coil is located between an outer radial end (84) and an inner radial end (87) of the outer detection target portion,
in the plan view of the outer coil and the inner coil, the inner radial end of the outer coil extends beyond the inner radial end of the outer detection target portion,
in the plan view of the outer coil and the inner coil, an outer radial end of the inner detection target portion extends beyond an outer radial end (88) of the inner detection target portion, and
in the plan view of the outer coil and the inner coil, an inner radial end of the inner coil is located between an inner radial end (85) and the outer radial end of the inner detection target portion.

8. The detector according to Claim 7, further comprising:
a differential voltage calculation unit (96) configured to calculate a differential voltage (Vssub) as difference between the AC voltage signal output from the outer coil and the AC voltage signal output from the inner coil; and
a force calculation unit (98) configured to calculate a force (Fz) acting on the rotating body in a direction perpendicular to the axial direction based on the differential voltage calculated by the differential voltage calculation unit.

9. The detector according to Claim 7 or 8, wherein
the receiving coil includes:
a first coil (150) that is configured to induce a voltage having a phase different from respective voltages induced in the outer coil and the inner coil, in response to the excitation coil receiving the AC excitation voltage; and
a second coil (160) that is configured to induce a voltage having a same phase as a phase of the voltage induced in the first coil, in response to the excitation coil receiving the AC excitation voltage,
the first coil is arranged on an outer side of the second coil in the radial direction,
an outer radial end and an inner radial end of the first coil are located between the outer radial end and the inner radial end of the outer detection target portion and are positioned closer to the inner radial end of the outer detection target portion, in a plan view of the outer coil, the inner coil, the first coil, and the second coil,
an outer radial end and an inner radial end of the second coil are located between the outer radial end and the inner radial end of the inner detection target portion and are positioned closer to the outer radial end of the inner detection target portion, in a plan view of the outer coil, the inner coil, the first coil, and the second coil,
the first coil is configured to output an AC voltage signal having an amplitude varying with a displacement of the outer detection target portion in the axial direction,
the second coil is configured to output an AC voltage signal having an amplitude varying with a displacement of the inner detection target portion in the axial direction, and
the detector further comprises:
a first sum voltage calculation unit (96) configured to calculate a first sum voltage (Vsadd) as sum of the AC voltage signal output from the outer coil and the AC voltage signal output from the inner coil;
a second sum voltage calculation unit (99) configured to calculate a second sum voltage (Vcadd) as sum of the AC voltage signal output from the first coil and the AC voltage signal output from the second coil; and
an angle calculation unit (97) configured to calculate a rotation angle of the rotating body based on the first sum voltage calculated by the first sum voltage calculation unit and the second sum voltage calculated by the second sum voltage calculation unit.

10. The detector according to any one of Claims 1 to 3, 5 to 8, wherein
an inner portion of the outer coil and an outer portion of the inner coil overlap each other in the radial direction, in a front view of the outer coil and the inner coil.

11. The detector according to Claim 4, wherein
the machine includes a motor (20) as a rotational driving source for the rotating body,
the motor includes a rotor (30) having a magnet unit (32) with magnetic poles whose polarities are alternately arranged in the circumferential direction, and
the angle calculation unit is configured to calculate a rotation angle of the rotor as the rotation angle of the rotating body.

12. The detector according to any one of Claims 1 to 3, 5 to 8, wherein
the receiving coil includes:
a first portion (110P, 120P, 130P) that is configured to generate a voltage having a first polarity between both ends of the receiving coil in response to the excitation coil receiving the AC excitation voltage; and
a second portion (110M, 120M, 130M) that is configured to generate a voltage having a second polarity between both ends of the receiving coil in response to the excitation coil receiving the AC excitation voltage, the second polarity being opposite to the first polarity, and
the receiving coil has either
a structure in which, in a plan view of the receiving coil,
the first portion (110P, 120P) is located on one side with respect to a center of the receiving coil in the circumferential direction,
the second portion (110M, 120M) is located on another side with respect to the center of the receiving coil in the circumferential direction, and
the first portion and the second portion are aligned in the circumferential direction, or
a structure in which, in the plan view of the receiving coil, the first portion (130P) and the second portion (130M) located on one side and the first portion and the second portion located on another side are arranged symmetrically with respect to the center.

13. The detector according to any one of Claims 1 to 3, 5 to 8, wherein
the machine is a vehicle having a wheel assembly as the rotating body.

14. The detector according to Claim 13, wherein
the bearing is arranged such that a center position (Lb) of the bearing in a width direction of the vehicle is located further inward in the width direction than a center position (Lh) of a wheel in the width direction, and
the wheel is included in the wheel assembly.

15. The detector according to Claim 14 depending on Claim 3, further comprising:
a correction unit configured to
obtain an offset amount (Loff) between a center position of the wheel in the width direction of the vehicle and a center position of the bearing in the width direction of the vehicle, and
correct the force calculated by the force calculation unit based on the obtained offset amount.

16. The detector according to Claim 1, wherein
the detection target includes:
a first detection target portion; and
a second detection target portion at a position facing the first detection target portion in the axial direction,
recesses (183, 283) and protrusions (182, 282) are alternately arranged in the circumferential direction in the first detection target portion and the second detection target portion,
the recesses are recessed in the axial direction,
the protrusions protrude in the axial direction relative to the recesses,
the recesses and the protrusions in the first detection target portion are arranged to face the recesses and the protrusions in the second detection target portion,
the receiving coil includes:
a first intermediate coil (130A) at a position facing the first detection target portion; and
a second intermediate coil (130B) at a position facing the second detection target portion,
the first intermediate coil and the second intermediate coil are configured such that the first intermediate coil induces a voltage having a same phase as a voltage induced in the second intermediate coil, in response to the excitation coil receiving the AC excitation voltage, and
the detector further comprises:
a differential voltage calculation unit (95) configured to calculate a differential voltage (Vcsub) as a difference between an output voltage signal of the first intermediate coil and an output voltage signal of the second intermediate coil; and
a force calculation unit (95) configured to calculate a force (Fy) acting on the rotating body in the axial direction, based on the differential voltage calculated by the differential voltage calculation unit.

17. A detector adapted to a machine including a rotating body (10), the detector comprising:
a bearing (50) rotatably supporting the rotating body with respect to a base portion (42) of the machine;
a first detection target (182, 183) extending in a circumferential direction of the bearing and having an annular shape concentric with the bearing;
a second detection target (282, 283) extending in the circumferential direction and having an annular shape concentric with the bearing
a receiving coil (130A, 130B) having a planar shape and extending in a radial direction of the bearing, the receiving coil fixed to the base portion and arranged at a position facing the detection target in an axial direction of the bearing; and
an excitation coil (100, 100A, 100B) configured to receive an AC excitation voltage, wherein
the first detection target and the second detection target are configured to rotate with the rotating body,
the second detection target is arranged at a position facing the first detection target in the axial direction,
recesses (183, 283) and protrusions (182, 282) are alternately arranged in the circumferential direction in the first detection target and the second detection target,
the recesses are recessed in the axial direction,
the protrusions protrude in the axial direction relative to the recesses,
the recesses and the protrusions in the first detection target are arranged to face the recesses and the protrusions in the second detection target,
the receiving coil includes:
a first intermediate coil (130A) at a position facing the first detection target; and
a second intermediate coil (130B) at a position facing the second detection target,
the first intermediate coil and the second intermediate coil are configured such that the first intermediate coil induces a voltage having a same phase as a voltage induced in the second intermediate coil, in response to the excitation coil receiving the AC excitation voltage, and
the detector further comprises:
a differential voltage calculation unit (95) configured to calculate a differential voltage (Vcsub) as a difference between an output voltage signal of the first intermediate coil and an output voltage signal of the second intermediate coil; and
a force calculation unit (95) configured to calculate a force (Fy) acting on the rotating body in the axial direction, based on the differential voltage calculated by the differential voltage calculation unit.
